# FASCICULE DE BREVET EUROPEEN

(11) **EP 2 121 490 B1**
(45) Date de publication et mention de la délivrance du brevet: **10.08.2011**
(21) Numéro de dépôt: 08775585.6
(22) Date de dépôt: 21.02.2008
(51) Int. Cl.: B65G 19/14, B65G 53/44, B65G 43/02

(54) **TRANSPORTEUR PNEUMATIQUE POUR LA DISTRIBUTION DE PRODUITS FIBREUX ET AUTRES PAR TUYAUX**
PNEUMATISCHER TRANSPORTER ZUR VERTEILUNG FIBRÖSER UND ANDERER PRODUKTE DURCH RÖHREN
PNEUMATIC TRANSPORTER FOR DISTRIBUTING FIBROUS AND OTHER PRODUCTS BY PIPES

(30) Priorité: 21.02.2007 FR 0701243
(43) Date de publication de la demande: 25.11.2009
(73) Titulaire: Dussau Distribution Sas, 40320 Pecorade (FR); Dussau, Christian, 40320 Samadet (FR)
(72) Inventeur: DUSSAU, Christian, 40320 Samadet (FR)
(74) Mandataire: Ravina, Bernard
(86) Numéro de dépôt international: PCT/FR2008/000230
(87) Numéro de publication internationale: WO 2008/129161

(56) Documents cités:
- DE-A1- 19 838 831
- FR-A1- 2 634 470
- US-A1- 2002 110 427

## Description

### Domaine technique

La présente invention est du domaine des matériel utilisés pour le transport par voie pneumatique de produits fibreux ou ligneux et autres par exemple des produits ou des sous-produits agricoles et ce depuis une trémie stockage, adaptée à recevoir ces produits, vers un lieu d'utilisation de ces derniers ou d'épandage distant de la trémie, le lieu d'épandage pouvant être une aire d'élevage d'animaux de rente.

### Etat de la technique antérieure

On connaît de l'état de la technique des transporteur pneumatique mettant en oeuvre une trémie de stockage des produits à transporter dans laquelle une chaîne de transfert sans fin, à disques y puise les produits et les délivre à une chambre de transfert distante, traversée par un flux d'air de transport apte à se charger, dans cette chambre, des produits apportés par la chaîne de transfert. En sortie de chambre, ce flux d'air est canalisé par une conduite de transport comportant en extrémité distale une ouverture de distribution. La chaîne de transport entre la trémie et la chambre de transfert est mobile dans une manche étanche formant en combinaison avec les intervalles entre deux disques consécutifs des cellules de transport des produits vers la chambre de transfert.

De tels transporteurs sont notamment connues des documents FR2634470 et US 20021013 1828.

### Exposé de l'invention

### Problème technique

Les transporteurs connus du genre précité sont utilisés soit pour le transport de produits relativement homogènes par exemple des produits granuleux, des produits pulvérulents ou de produits gâteux par exemple du béton.

Ces transporteurs sont en l'état, inutilisables pour le transport de produits fibreux comme par exemple de la paille. Ceci tient au fait que le produit fibreux pour être transporté par le flux d'air doit se présenter dans un état foisonné à l'origine de bourrage systématique à rentrée de la chambre de transfert. Ce bourrage conduit la plupart du temps au blocage de la chaîne de transfert et par voie de conséquence à l'arrêt de la distribution du produit fibreux nécessitant une intervention humaine. Des corps étrangers présents dans le produit peuvent également être à l'origine du blocage de la chaîne de transport. Une intervention humaine est toujours croûteuse et ne peut dans la plupart des cas être menée à brève échéance. Il est possible de résoudre partiellement ce problème en augmentant l'intensité de l'effort de traction, mais une traction trop importante conduit à augmenter de manière très conséquente l'intensité des efforts de frottement à l'entrée de la chambre et ne permet toujours d'éviter le blocage de la chaîne. De ce problème, il peut en résulter des détériorations des organes du transporteur et notamment de la chaîne et/ou des roues d'entraînement exigeant des réparations relativement longues et coûteuses. Ces détériorations peuvent aussi concerner les joints d'étanchéité que possèdent les disques de la chaîne. La perte d'étanchéité se traduira par un mauvais fonctionnement du transporteur. Cependant il s'avère que le transport des produits dans un état foisonné est nécessaire faute de quoi ces produits sous forme de paille ou sous forme d'autres produits fibreux ou ligneux risque d'être à l'origine de la formation de bouchons dans la conduite de transport pneumatique. Par ailleurs un état foisonné du produit est requis pour la fondation de lit de litière et autres.

### Solution technique

La présente invention a pour objet de résoudre le problème sus évoqué en mettant en oeuvre un transporteur comportant des moyens aptes à réduire les risques do bourrage et en limiteur les conséquences, et réduire la dépense énergétique.

Un autre but de la présente invention est la mise en oeuvre d'un transporteur apte à détruire de manière autonome les bourrages lorsque ces derniers se produisent, à éviter le blocage dû à des corps étranger en facilitant leur passage et à réduire les conséquences de ces blocages.

À cet effet le transporteur selon l'invention, pour délivrer par voie pneumatique des produits à distance comprenant un châssis sur lequel est installé un convoyeur mécanique comportant une ouverture d'alimentation en produit à transporter, une boîte de transfert avec chambre de transfert traversée de part en part de manière étanche par le convoyeur lequel y déverse les produits transportés, ladite boîte de transfert selon un axe transversal à la direction du mouvement du convoyeur dans la chambre de transfert comportant deux orifices traversants débouchant tous deux dans la chambre de transfert dont un est prévu pour communiquer avec une source d'air sous pression apte à générer un flux d'air sous pression et l'autre est prévu pour communiquer avec une conduite souple de distribution dans laquelle les produits préalablement déversés par le convoyeur dans la chambre de transfert, y sont transportés par le flux d'air sous pression préalablement introduit dans ladite chambre, ledit convoyeur comportant un élément mobile de transport dotés d'alvéoles consécutifs délimités par des cloisons de séparation et d'une chemise, tubulaire dans laquelle évolue l'élément mobile de transport, cette chemise s'étendant entre l'ouverture d'alimentation et la boîte de transfert et déterminant avec les alvéoles de l'élément mobile de transport des cellules consécutives de transport des produits depuis l'ouverture d'alimentation vers la boîte de transfert, se caractérise essentiellement en ce qu'est prévu un moyen apte à détecter des conditions de blocage de l'élément mobile du convoyeur et apte à émettre un signal de défaut si ces conditions sont détectées, un moyen de commande étant associé au moyen de détection, ce moyen de commande, si le signal de défaut est émis, étant apte à commander le sens de marche inverse de l'élément mobile de transport et ce pendant une durée déterminée donnée par un moyen de temporisation associé au moyen de commande. Au terme de la période de temporisation, le moyen de commande commandera la marche de l'élément mobile dans son sens normale de déplacement.

Cette disposition de marche arrière et avant de l'élément mobile de transport sur une distance réduite, déterminée par la temporisation permet de déstructurer un bouchon formé en amont de la chambre de transfert. Il y a lieu aussi de noter que cette disposition de marche arrière et marche avant permet de donner, lors de la reprise de la marche avant de l'élément mobile de transport, un choc relativement violent sur le bouchon formé ce qui permet soit de le déstructurer soit de le déplacer vers la chambre do transfert.

Par ailleurs, une telle disposition est apte à conférer au transporteur une grande autonomie de fonctionnement. Pour cette raison il ne requiert aucun personnel pour son fonctionnement et sa surveillance, la sécurité du personnel s'en trouve ainsi amélioré. Par ailleurs de telles dispositions assurent la continuité du fonctionnement du transporteur.

Selon une autre caractéristique de l'invention, le moyen apte à détecter des conditions de blocage de l'élément mobile du convoyeur est apte à mesurer la puissance consommée pour l'entraînement de l'élément mobile du convoyeur, et est associé à un moyen de comparaison apte à comparer la valeur mesurée à une valeur de consigne et à émettre un signal de défaut si la valeur mesurée est supérieure à la valeur de consigne, le moyen de commande, si le signal de défaut est émis, commandant alors le sens de marche inverse de l'élément mobile de transport et ce toujours pendant une durée déterminée donnée par le moyen de temporisation associé au moyen de commande. Au terme de cette période de temporisation, le sens normal de marche de l'élément mobile sera rétabli par le moyen de commande.

En variante, selon une autre caractéristique de l'invention, le moyen apte à détecter des conditions de blocage de l'élément mobile du convoyeur est apte à mesurer la valeur de la vitesse de déplacement de l'élément mobile du convoyeur ou d'un organe cinématiquement lié à l'organe mobile et est associé fi un moyen de comparaison apte à comparer la valeur mesurée à une valeur de consigne et à émettre un signal de défaut si la valeur mesurée est inférieure à la valeur de consigne, si le signal de défaut est émis commandant alors le sens de marche inverse de l'élément mobile de transport et ce toujours pendant une durée déterminée donnée par le moyen de temporisation associé au moyen de commande. Au terme de la période de temporisation, le moyen de commande commandera la marche de l'élément mobile de transport dans son sens normal.

Il est avantageux d'écarter le plus possible les risques de formation de bouchon dans le convoyeur pouvant provoques l'arrêt ou le fort ralentissement de l'élément mobile de transport,

Ainsi selon une autre caractéristique de l'invention, en amont de la chambre de transfert et en aval de l'ouverture d'alimentation, sur le trajet de l'élément mobile de transport, la chemise est dotée d'au moins un dispositif d'introduction progressive des produits dans le volume qu'elle définit.

Avantageusement, selon une forme préférée de réalisation, le dispositif d'introduction progressive présente un orifice d'introduction se développant de manière oblique par rapport à la direction du mouvement de l'élément mobile au travers du dit orifice.

Il a été observé qu'une telle disposition réduit de manière notable le risque de bourrage en amont de la chambre de transfert et le risque de blocage de l'élément mobile de transport. Ceci tient essentiellement au fait que l'oblicité de l'orifice d'introduction assure la progressivité de l'introduction du produit dans la partie de la chemise amont à la boîte de transfert. Par ailleurs en raison de cette oblicité des corps étrangers durs tels que bouts de bois ou autres peuvent être cisaillés ou cassés sur le bord de l'orifice sous l'effet de l'avancement de l'élément mobile de transport.

Pour faciliter le cisaillement de ces corps étrangers, le bord de l'orifice d'introduction, selon une autre caractéristique de l'invention est avivé.

Selon une autre caractéristique de l'invention, le dispositif d'introduction est agencé en entonnoir, de l'orifice d'introduction est formé dans ce dispositif d'entonnoir. Selon une autre caractéristique, le dispositif d'introduction est radialement expansible afin de comprimer la paille ou autre produit pour en réduire son volume et son degré de foisonnement avant son introduction dans la chambre de transfert.

Une telle disposition permet encore d'écarter le risque de bourrage. Ceci tient essentiellement au fait que d'une part que le volume de la paille ou autre produit qui se présente dans un état foisonné dans chaque cellule du convoyeur est progressivement réduit pour atteindre le diamètre de l'orifice d'introduction de la chambre de transfert, et d'autre part que les surépaisseurs qui pourraient être formées par la paille ou autre produit sur les cloisons de séparation de l'élément mobile sont absorbées par la déformation de ce dispositif d'entonnoir. Cette réduction de volume conserve cependant à la paille ou autre produit un degré de foisonnement suffisant pour après avoir été transportée par voie pneumatique dans la conduite de distribution être utilisable en tant que litière par exemple.

Pour écarteur encore le risque de coincement de l'élément mobile dans le dispositif d'entonnoir, ce dernier comporte une paroi souple élastiquement déformable. Cette paroi souple pourra absorber les surépaisseurs formées par la paille ou autre produit sur les cloisons de séparation.

Dans la pratique, selon une autre disposition de l'invention, le dispositif d'introduction sous forme d'entonnoir est formé d'un corps tubulaire rigide comprenant l'orifice oblique d'introduction, d'une paroi rigide mobile disposée en regard de l'orifice d'introduction, et d'une paroi souple fixée d'une part au corps tubulaire et d'autre part à la paroi mobile laquelle est maintenue à écartement du corps tubulaire tant longitudinalement que radialement par un mécanisme support autorisant le déplacement radial de ladite paroi. à l'encontre de forces de rappel en position.

Selon une variante d'exécution, le dispositif d'introduction sous forme d'entonnoir est intégralement réalisé en matériau souple élastiquement déformable.

Pour écarter encore le risque de coincement, chaque cloison de séparation que comporte l'élément mobile de transport présente une garniture d'étanchéité périphérique prévue pour venir glisser contre la face interne de la chemise, cette garniture, sous l'effet d'efforts radiaux pouvant se rétracter radialement

Pour encore diminuer le risque de coincement de la masse fibreuse en aval de l'orifice d'introduction progressive, la chemise du convoyeur, entre le corps tubulaire du dispositif d'introduction progressive et la chambre de transfert comporte au moins une fente s'étendant entre une zone amont et une zone aval de cette chemise.

Préférentiellement, selon une autre caractéristique de l'invention la fente se développe de manière oblique par rapport aux génératrices de la chemise afin d'imprimer à la masse de matière fibreuse transportée un mouvement de vissage.

Selon encore une autre caractéristique de l'invention, la fente présente au moins deux segments de fente présentant des sens d'oblicité alternés.

Selon une autre caractéristique de l'invention, la fente est recouverte par une paroi souple élastiquement déformable.

Selon une autre caractéristique de l'invention, le transporteur selon l'invention comporte un dispositif d'alimentation en produit en relation de communication avec l'ouverture d'alimentation du convoyeur.

Selon une autre caractéristique de l'invention le dispositif d'alimentation est une trémie.

Selon encore une autre caractéristique de l'invention, l'élément mobile du convoyeur chemine dans une goulotte inférieure pratiquée dans la trémie.

Avantageusement, selon une autre disposition de l'invention, en aval de l'ouverture d'alimentation du convoyeur et en amont du dispositif d'introduction sous forme d'entonnoir est prévu un dispositif d'évasement dans lequel la masse de paille ou autre produit transportée par chaque cellule, peut se dilater sous l'effet des forces élastiques internes.

Grâce au dispositif d'évasement et au dispositif d'introduction sous forme d'entonnoir, il est possible d'ajuster et de contrôler le degré du foisonnement de la masse de paille ou autre produit transportée par chaque cellule vers la chambre de transfert. Ceci contribue encore au bon fonctionnement du transporteur selon l'invention.

IL est important que la machine puisse recevoir tant des produits en vrac que des produits en balle c'est-à-dire dans un état fortement comprime. Pour assurer le chargement des alvéoles de la chaîne avec de tels produits en balle, il est nécessaire en préalable de les déstructurer. Ainsi, le transporteur selon un autre aspect de l'invention comprend dans sa trémie au moins un rotor déchiqueteur démêleur constitué par un arbre et par des couteaux déchiqueteurs fixés radialement à l'arbre. Ce rotor déchiqueteur est entraîné en rotation dans la trémie par un organe moteur.

Afin de gorger les alvéoles de la chaîne et d'éviter toute rupture de l'alimentation de ces alvéoles, le transporteur selon un autre de ses aspects comporte dans la trémie un rotor dévouteur gaveur entraîné par un organe moteur. Ce rotor en tournant sur lui-même est apte à détruire les voûtes de produit qui pourraient se former dans la trémie et est apte également à gaver les cellules de l'élément mobile de transport en repoussant la paille ou autre produit vers ces dernières.

Il est nécessaire d'éviter le gavage des cellules lors du coincement de l'élément mobile de transfert et de son mouvement arrière. À cet effet, selon un autre aspect de l'invention, le moyen de commande du moteur d'entraînement du rotor dévouteur, dès qu'un signal de défaut est émis par le moyen de comparaison de l'intensité de l'effort d'entraînement de l'élément mobile de transport, arrête le moteur d'entraînement du rotor dévouteur gaveur pendant une période de temps déterminée. Si pendant cette période aucun autre signal de défaut n'a été émis, le rotor du dévouteur gaveur sera de nouveau activé.

Il est parfois utile d'adjoindre au produit transporté d'autres produits comme par exemple des copeaux de bois et autres. À cet effet le transporteur, selon un autre de ses aspects comporte en aval du dispositif d'introduction sous forme d'entonnoir en relation de communication avec le volume interne de la chemise du convoyeur, un ou plusieurs distributeurs de produits d'addition. Ces distributeurs déversent de manière contrôlée la quantité appropriée de produits d'addition dans les alvéoles de l'élément mobile de transport.

Pour certaines applications, notamment pour la formation des litières sous forme de paille et autres ligneux dans les aires d'élevage, il convient de traiter ces matériaux de litière avant distribution pour détruire les germes infectieux qu'ils pourraient transporter. Ainsi le transporteur, selon un autre de ses aspects, comporte des réservoirs de stockage de produits de traitement liquides, des moyens de pompes pour puiser ces produits et des moyens de pulvérisation pour pulvériser ces produits liquides dans le flux d'air de transport, Ces produits de traitement peuvent être du type phytosanitaire ou bien pour certaines applications limitées au dépoussiérage être de l'eau.

Il est important que la valeur du débit de la pulvérisation dépende de la vitesse de l'élément mobile et donc de la vitesse de délivrance des produits à la boîte de transfert. À cet effet, selon une autre caractéristique de l'invention, le moyen de pompe est actionné par l'organe moteur d'entraînement de l'élément mobile de transport.

Grâce aux tourbillons d'air dans la conduite de distribution pneumatique, le brouillard formé par les produits phytosanitaires pénétrera en profondeur la masse de produit transportée et assurera un traitement optimal de cette dernière et ce avant délivrance. On comprend que l'action des produits phytosanitaires s'effectue dans la conduite de transport c'est-à-dire dans un milieu isolé et confiné ce qui accroît son efficacité.

La conduite de transport pneumatique permet comme on le conçoit la délivrance à distance du transporteur de produits traités. Ainsi ce transporteur peut être utilisé pour la distribution de produits traités dans des milieux soumis à des conditions sanitaires strictes. La distribution des produits dans ces milieux pourra être effectuée par des conduites internes propres à ces milieux et pouvant être désinfectées avec ces derniers. L'une des extrémités de ces conduites pourra être amenée à l'extérieur de ce milieu et sera dotée de moyens de raccordement à la conduite de distribution que comporte le transporteur. Ainsi cette conduite de distribution ainsi que le transporteur pourront demeurer à l'extérieur de ces milieux et ne pourront pas les contaminer ou les polluer.

Il est important d'éviter de gaver tant la boîte de transfert que la conduite de distribution pneumatique afin d'écarter le risque de formation de bouchons de produits dans ces dernières. Pour cette raison, le transporteur selon un autre de ses aspects comporte un moyen de contrôle de la pression du flux d'air sous pression traversant la boîte de transfert, apte à émettre un signal de défaut si la valeur de la pression d'air atteint ou dépasse un seuil préétabli. À partir de ce signal de défaut, le mouvement de l'élément mobile de transport que comporte le convoyeur sera ralenti ou bien interrompu. Le mouvement reprendra en allure normale dès disparition de ce signal de défaut.

Avantageusement, selon la forme préférée de réalisation, sont déterminés deux seuils de pression. Le dépassement du premier seuil de pression engendre le ralentissement du mouvement de l'élément mobile de transport, le franchissement du second seuil de pression engendre l'arrêt de cet élément mobile.

Selon une variante d'exécution, la vitesse de l'élément mobile de transport, à partir du franchissement du premier seuil de pression est inversement proportionnelle à la valeur de la pression de l'air d'alimentation de la boîte de transfert.

Il est parfois utile que le transporteur selon l'invention puisse être amené facilement à proximité du lieu de distribution des matières fibreuses. Ainsi selon un autre de ses aspects, le châssis du transporteur est équipé d'organes de roulement et d'un dispositif de fixation et d'un timon d'attelage à un véhicule tracteur.

En vue de la distribution de la matière fibreuse dans un local d'élevage, la conduite de transport peut être connectée à un dispositif d'épandage supporté par un chariot mobile sur un rail suspendu dans le local d'élevage.

### Description sommaire des figures et des dessins

D'autres avantages, buts et caractéristiques de l'invention, apparaîtront à la lecture de la description d'une forme préférée de réalisation, donnée à titre d'exemple non limitatif, en se référant aux dessins annexés en lesquels :

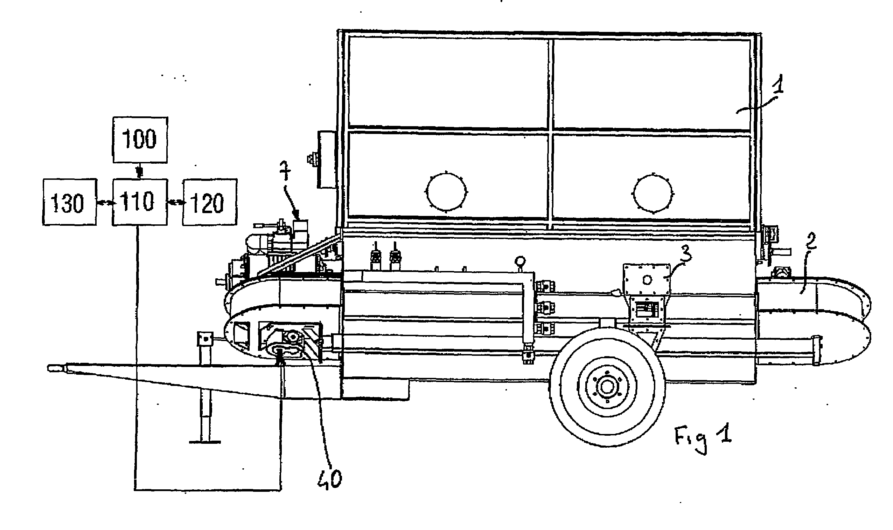

- la figure 1 est une vue de profil du transporteur selon l'invention,

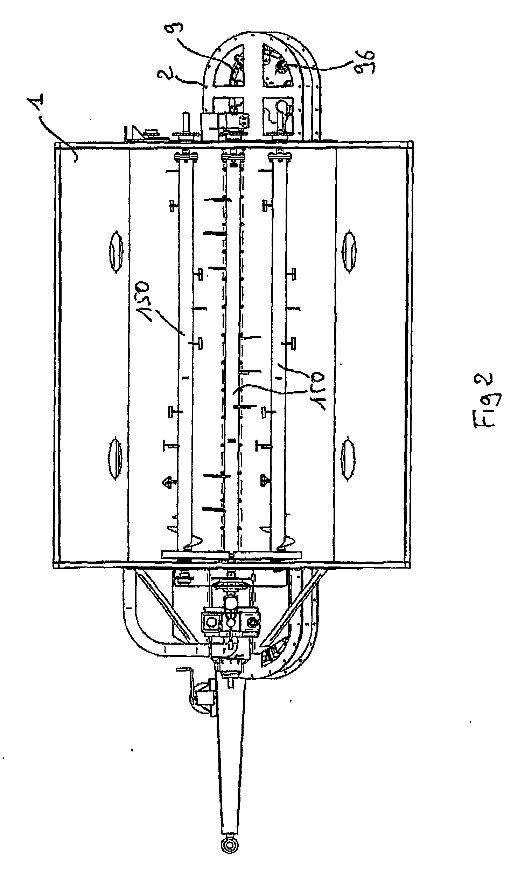

- la figure 2 est une vue de dessus d'un transporteur selon l'invention,

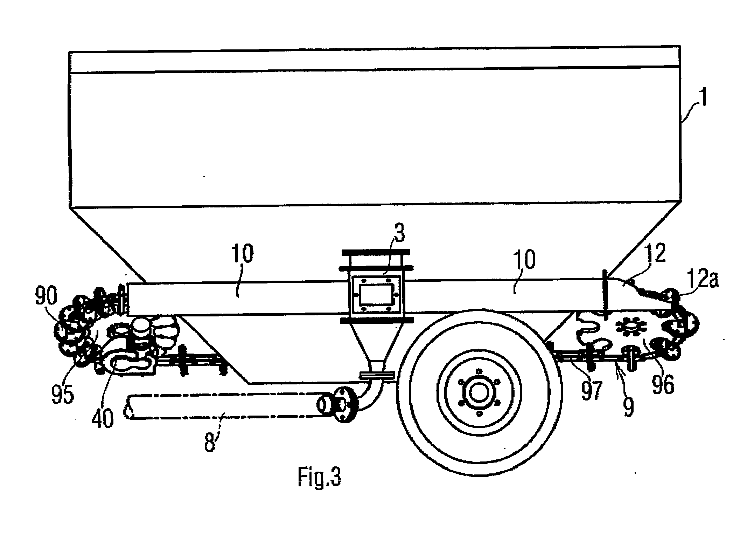

- la figure 3 est une vue de profil d'un transporteur selon l'invention, avec une trémie selon une autre forme de réalisation, la chemise du convoyeur ayant été partiellement retirée,

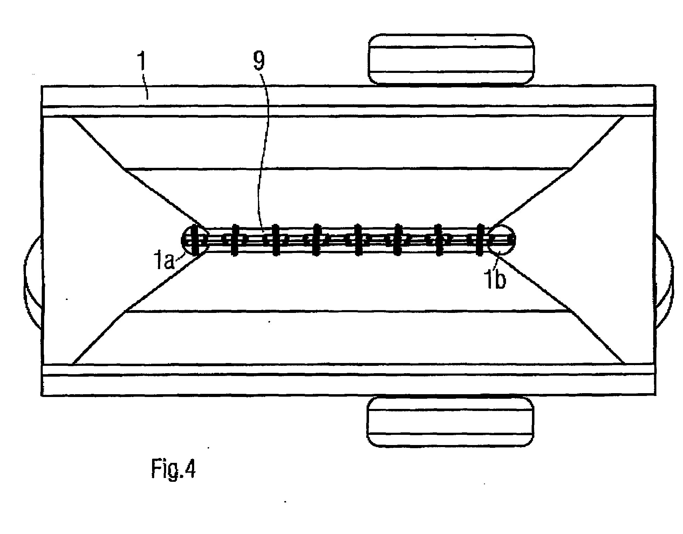

- la figure 4 est une vue de dessus du transporteur selon la figure 3, les différents rotors que comporte la trémie n'étant pas représentés,

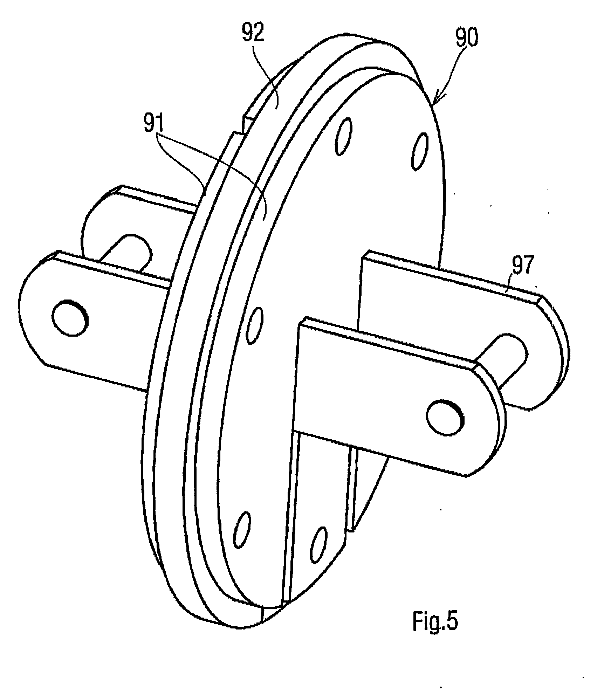

- la figure 5 est une vue en perspective d'une cloison de séparation d'un élément mobile de transport sous forme de chaîne sans fin,
- la figure 6 est une vue en coupe de la boîte de transfert du transporteur,

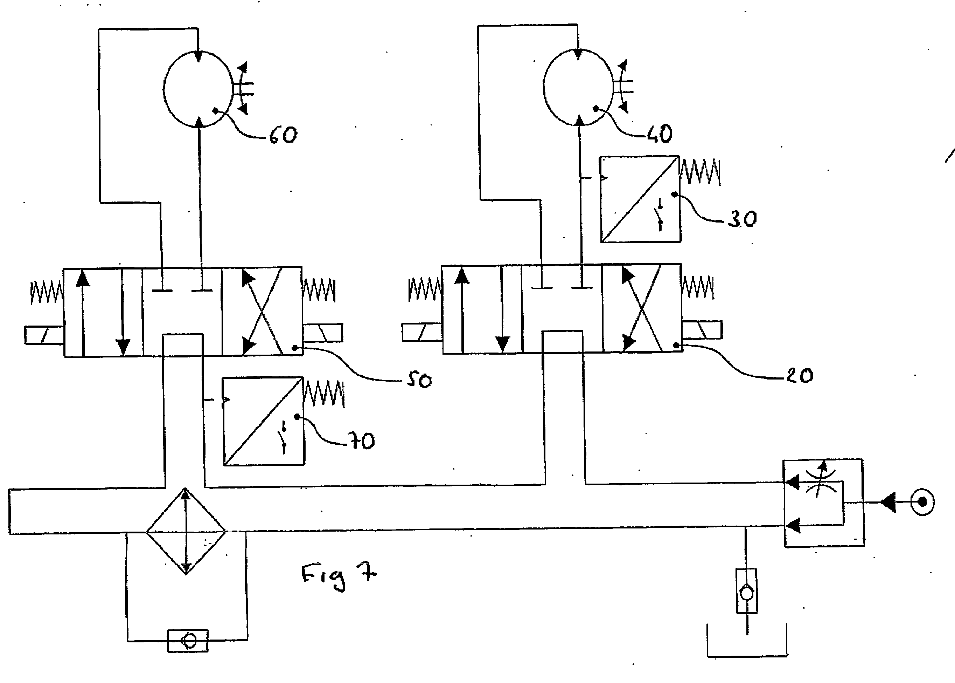

- la figure 7 est un schéma montrant l'installation hydraulique du transporteur,

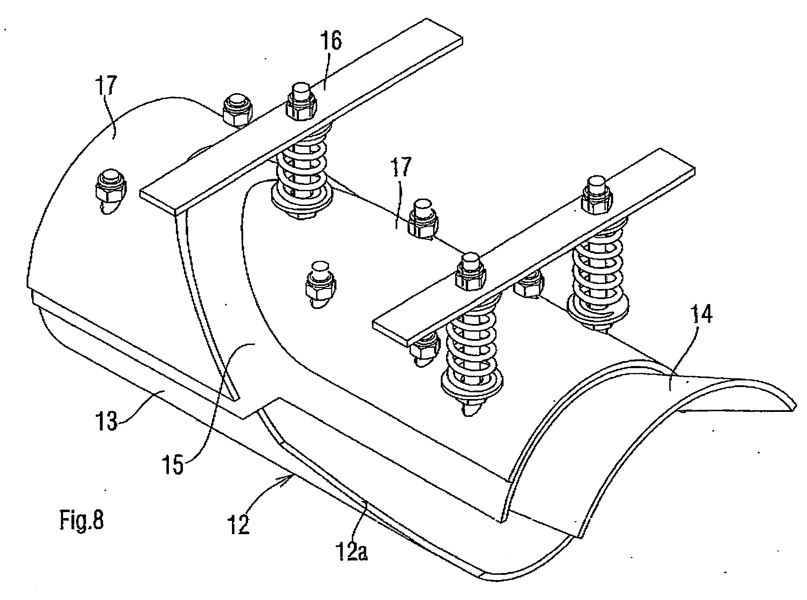

- la figure 8 est une en perspective d'un dispositif d'introduction des produits dans la chemise,

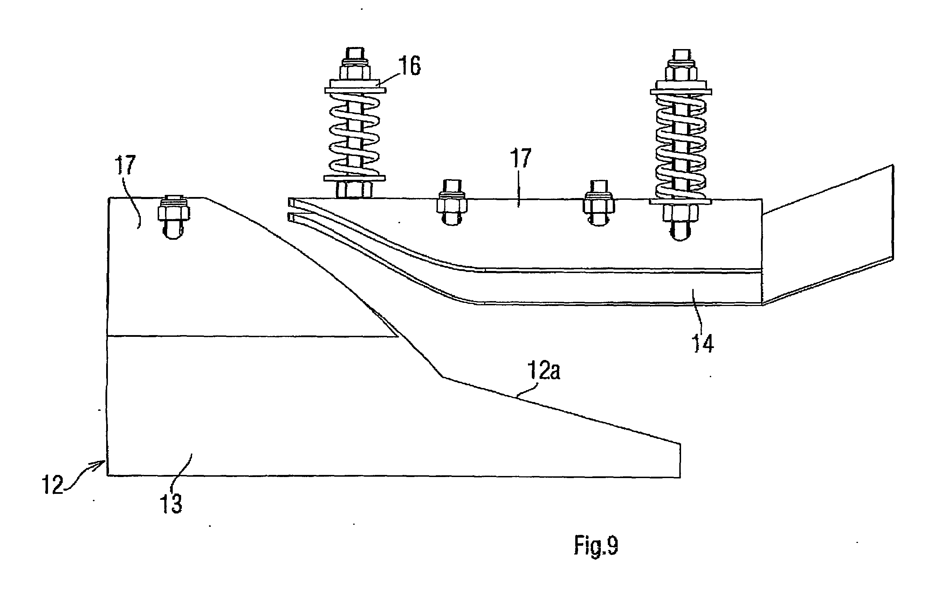

- la figure 9 est une vue en éclate du dispositif d'introduction,

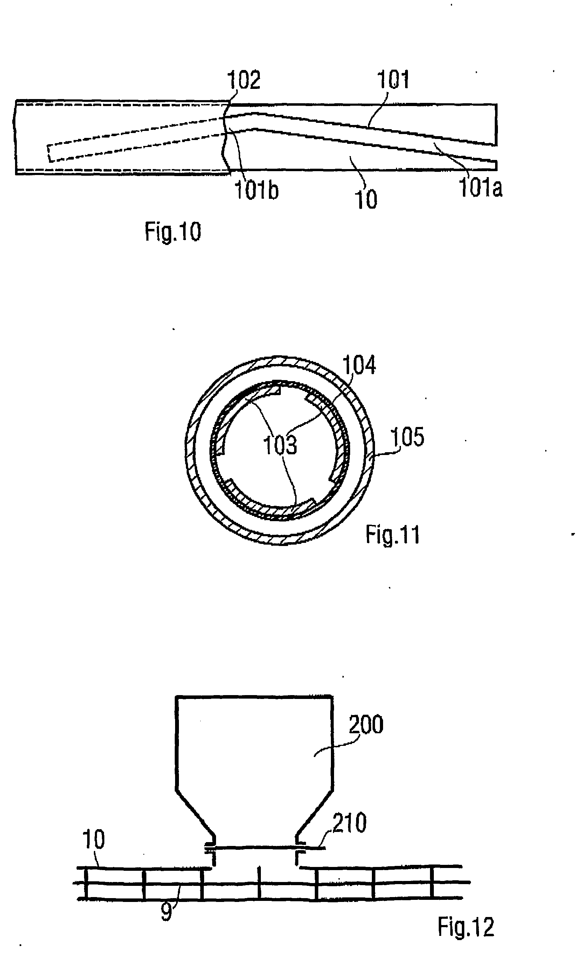

- la figure 10 est une vue de dessus d'une chemise du convoyeur avec fente,
- la figure 11 est une vue de en coupe d'une chemise du convoyeur radialement expansible,
- la figure 12 est une vue schématique d'un distributeur de produit additionnel associé au convoyeur,

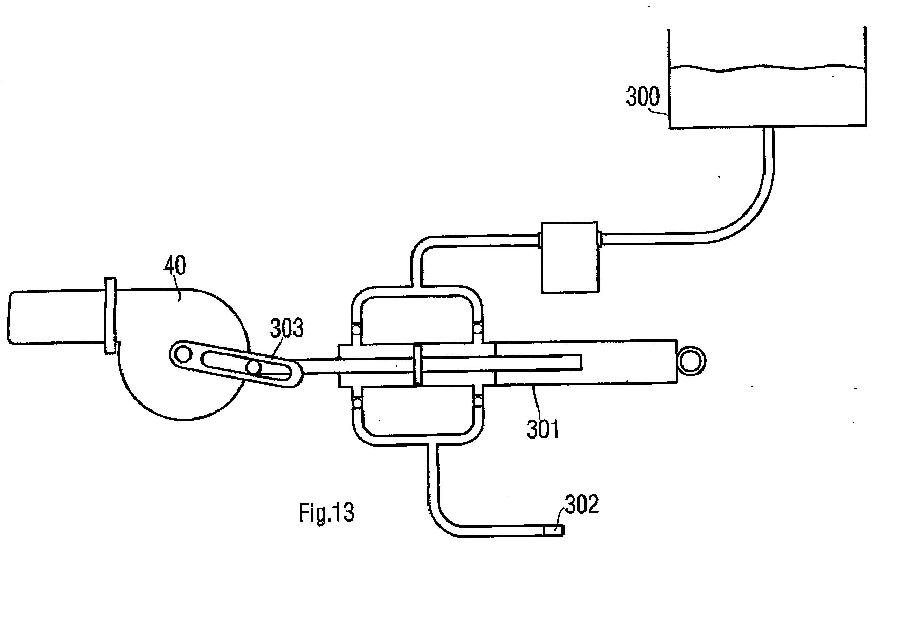

- la figure 13 est une vue schématique d'un ensemble de moyens pour la distribution de produits phytosanitaires dans le flux d'air de transport,
- la figure 14 est une vue de profil d'un transporteur selon une seconde forme de réalisation,
- la figure 15 est une vue de dessus du transporteur selon la seconde forme de réalisation,

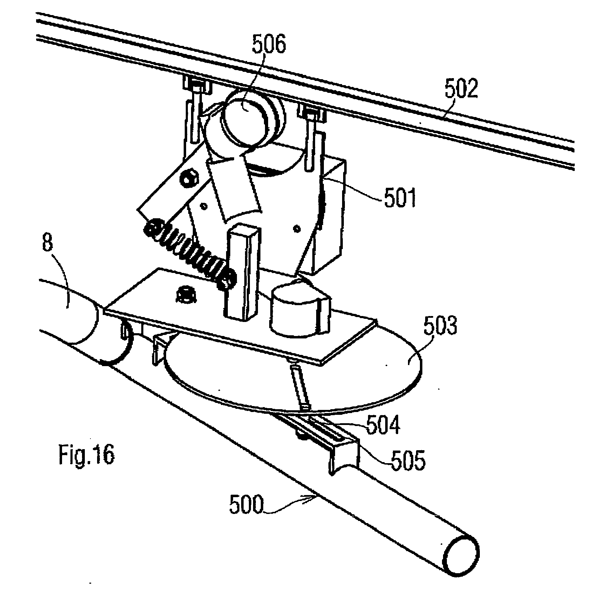

- la figure 16 est une vue en perspective d'un canon de projection des matières fibreuses que comporte le transporteur selon l'invention,
- la figure 17 est une vue schématique du châssis du transporteur,
- les figures 18 et 19 sont des vues en coupe de la boîte de transfert,
- la figure 20 est une coupe de la boîte de transfert montrant la présence d'organes de nettoyage,
- la figure 21 est une vue de détail d'une dent d'une roue menante ou menée,
- la figure 22 est une vue en coupe transversale de la chemise au niveau de l'une des roues menante ou menée du convoyeur,
- les figures 23 et 24 montrent une autre forme de réalisation du moyen apte à détecter les conditions de blocage et du moyen de commande,
- la figure 25 montre de manière schématique un rotor équipant la trémie, apte à s'opposer à la formation de voutes,
- la figure 26 montre vue de dessus un exemple d'association du transporteur à une machine mélangeuse de produits ou sous produits agricoles,
- la figure 27 montre vue de dessus un transporteur associé à une machine démêleuse selon une première forme de réalisation,
- la figure 28 montre vue de dessus un transporteur associé à une machine démêleuse selon une deuxième forme de réalisation,
- la figure 29 montre un moyen pour contrôler et calibrer la quantité de matière à distribuer au convoyeur mécanique selon une première forme de réalisation,
- la figure 30 montre un moyen pour contrôler et calibrer la quantité de matière à distribuer au convoyeur mécanique selon une deuxième forme de réalisation,
- la figure 31 montre un moyen pour contrôler et calibrer la quantité de matière à distribuer au convoyeur mécanique selon une troisième forme de réalisation,
- la figure 32 montre un moyen pour contrôler et calibrer la quantité de matière à distribuer au convoyeur mécanique selon une quatrième forme de réalisation.
- la figure 33 montre un moyen pour contrôleur et calibrer la quantité de matière à distribuer au convoyeur mécanique selon une cinquième forme de réalisation.

### Meilleure manière de réaliser l'invention

Tel que représenté, le transporteur selon l'invention, pour la distribution de paille ou autre matière fibreuse ou ligneuse à distance, comprend sur un châssis 1000 formé d'un longeron 1010 et d'une traverse 1020 porte-essieu de roues ou formant essieu de roues, un convoyeur mécanique 2 forme d'un élément mobile 9 et d'une chemise tubulaire 10 dans laquelle évolue ledit élément mobile 9, ladite chemise comportant une ouverture d'alimentation en produit à transporter. Sur le châssis, le transporteur comporte une boîte de transfert 3 avec chambre de transfert 4 traversée de part en part de manière étanche par l'élément mobile du convoyeur 2 lequel y déverse les produits transportés, ladite boîte de transfert 3 selon un axe transversal à la direction du mouvement du convoyeur dans la chambre de transfert 4 comportant deux orifices traversants 5, 6 débouchant tous deux dans la chambre de transfert 4 dont un 5 est prévu pour communiquer avec une source d'air sous pression 7 installée sur le châssis, apte à générer un flux d'air sous pression et dont l'autre 6 est prévu pour communiquer avec une conduite de distribution 8 dans laquelle les produits préalablement déversés par l'élément mobile du convoyeur dans la chambre de transfert, y sont transportés par le flux d'air sous pression préalablement introduit dans ladite chambre.

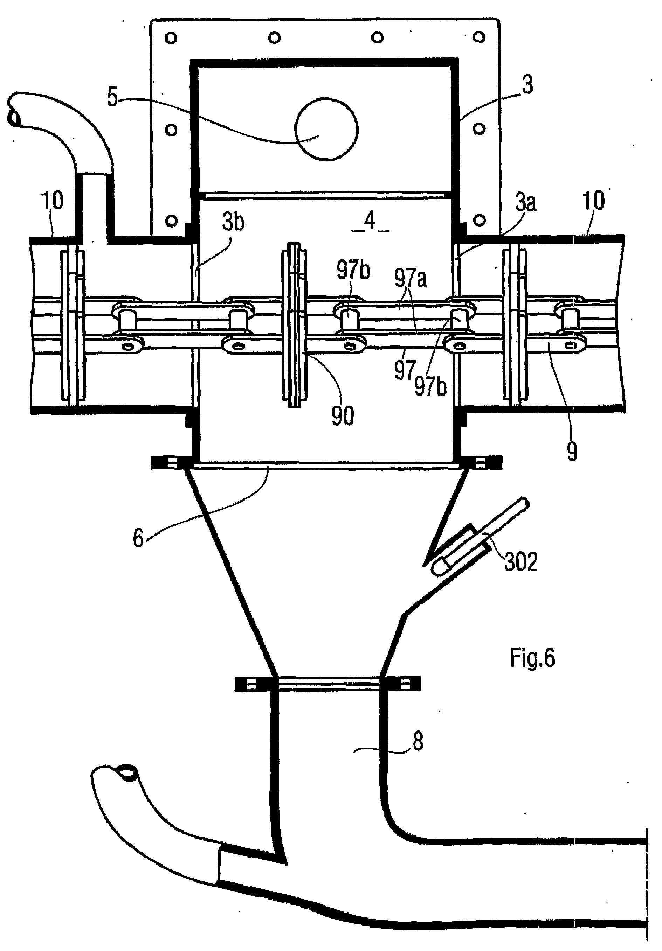

On peut voir notamment en figure 6 que la chemise 10 se raccorde à la boîte de transfert 3 et comporte une partie amont de chemise disposée en amont de la boîte et en communication avec la chambre 4 par un orifice 3a et une partie aval de chemise disposée en aval de ladite boîte et en communication avec la chambre 4 par un orifice 3b, les orifices traversants 3a et 3b étant pratiqués dans deux parois opposées de la boîte de transfert.
Avantageusement de l'air sous pression sera injecté aval dans la chemise 10 en aval de la boîte. A cet effet la partie aval de conduite comporte un piquage auquel est raccordée une conduite connectée à la source d'air sous pression. Cette disposition permet de créer immédiatement en aval de la boîte de transfert un flux d'air orienté vers la chambre permettant de refouler vers cette dernière les éventuels produits véhiculés par l'élément mobile 9 dans la partie aval de la chemise. Pourra être prévue une vanne ou organe analogue pour le contrôle du débit d'air sous pression introduit dans la partie aval de conduite.

Selon la forme préférée de réalisation, la source d'air sous pression 7 est un compresseur doté d'une bouche d'aspiration d'air et d'une bouche de refoulement d'air- Pour notamment réduire le bruit, la bouche de refoulement d'air est raccordée à une cavité de refoulement de grande capacité, formant silencieux, cette cavité étant elle même connectée à l'orifice d'entrée d'air 5. Avantageusement, la cavité formant silencieux est constituée par le volume interne de l'un au moins des profilés constituant le châssis 1000 du transporteur, préférentiellement le longeron 1010. Ce longeron 1010 pourra comporter une cloison interne formant chicane. Cette disposition vise à augmenter la longueur du trajet de l'air dans le longeron. Il y a lieu de noter également que l'air en sortie du compresseur est plus chaud que la température atmosphérique et que par passage dans le longeron il se refroidit.

Dans le même esprit, la bouche d'aspiration d'air est connectée à une cavité d'aspiration de grande capacité constituant un silencieux. Cette cavité d'aspiration sera avantageusement pourvue de plusieurs orifices d'aspiration 1021. En multipliant le nombre d'orifices d'aspiration, est réduite, au niveau de chaque orifice, la vitesse d'écoulement de l'air aspiré. Cette diminution de vitesse réduit le risque de transport de poussières et autres salissures pouvant potentiellement polluer le produit à transporter. Avantageusement, la cavité d'aspiration est constituée par le volume interne d'un des éléments du châssis par exemple l'une des traverses 1020 de ce dernier.

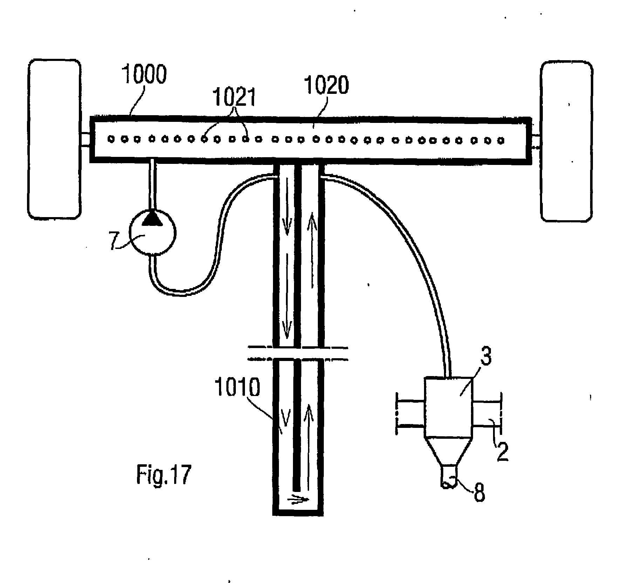

Les dispositions précédemment décrites sont représentées en figure 17.

Dans la conduite 8 pourra être introduit un flux d' air sous pression pour faciliter le transport pneumatique. A cette conduite est dotée d'un piquage adapté raccordé par une conduite à la source d'air sous pression. Pourra être prévue une vanne ou analogue pour le contrôle du débit d'air.

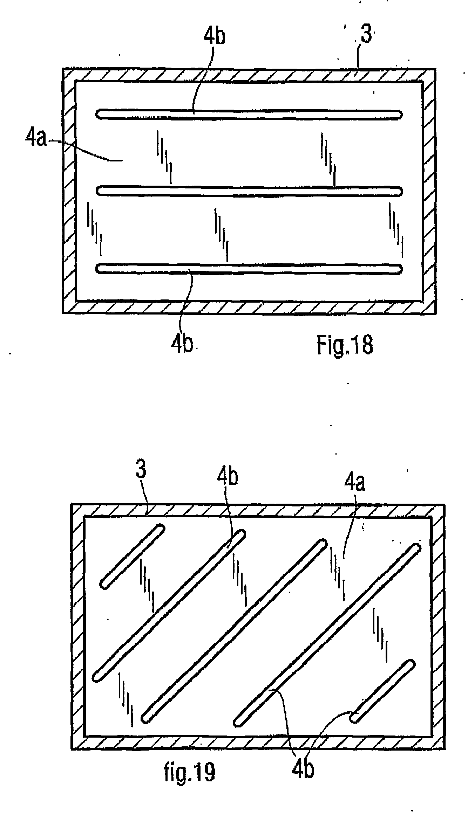

En aval de l'orifice 5 et en amont de l'élément mobile 9, la chambre de transfert 4 présente une paroi de répartition d'air 4a percée d'au moins un orifice traversant 4b de répartition se présentant avantageusement sous forme d'une lumière oblongue. Préférentiellement, de façon que le flux d'air puisse balayer l'ensemble du volume de la chambre de transfert 4, seront prévus plusieurs lumières oblongues judicieusement réparties. Il y a lieu de noter que compte tenu de la forme des orifices, le flux d'air est formé par un ou plusieurs rideaux d'air. Une telle disposition est représentée en figures 18 et 19. Sur la figure 18 on peut voir que les orifices oblongs sont parallèles à deux parois opposées de la chambre de transfert 4 tandis qu'en figure 19 on peut voir que les orifices oblongs sont obliques par rapport à ces deux parois.

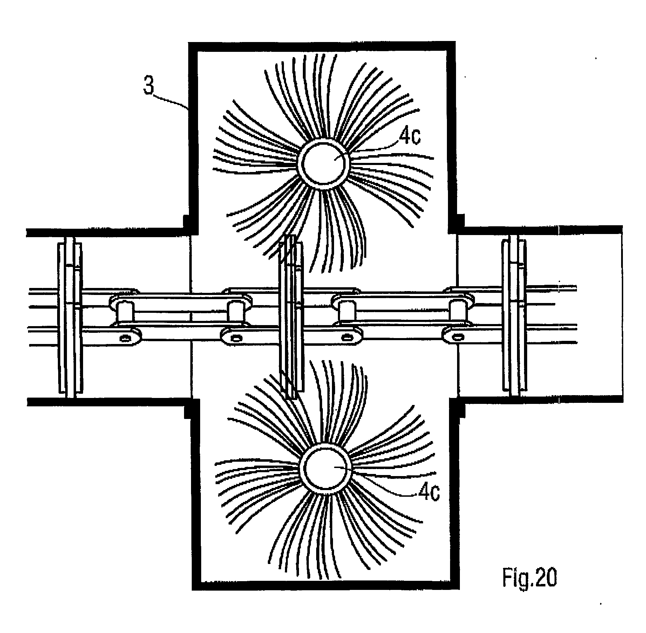

Pour nettoyer l'élément mobile de transport 9 afin d'éviter qu'il ne transporte hors de la chambre de transfert 4 les produits véhiculés, est prévu, dans la chambre de transfert 4, comme on peut le voir en figure 20, au moins un organe de nettoyage 4c, sous forme de balai, venant frotter contre l'élément mobile 9. Cet organe de nettoyage pourra être rotatif et entraîné par un moteur approprié ou bien pourra être rotatif et entraîné par le flux d'air de transport. Il pourra être entraîné en rotation aussi par l'organe mobile 9. L'axe de rotation de cet organe pourra être perpendiculaire à la direction de déplacement de l'élément mobile 9 dans la boîte de transfert ou bien parallèle cette direction de déplacement ou bien encore oblique.

Selon une variante non représentée, cet organe de nettoyage pourra être constitué par une série de doigts flexibles montés de manière fixe dans la boîte de transfert.

Avantageusement seront prévus deux organes de nettoyage disposés de part et d'autre de l'élément de l'organe mobile 9.

L'élément mobile de transport 9 est doté d'alvéoles consécutifs délimités par des cloisons de séparation 90 équidistantes. La chemise tubulaire 10 s'étend entre l'ouverture d'alimentation et l'amont de la boîte de transfert 3 et détermine avec les alvéoles de l'élément mobile de transport 9 des cellules consécutives de transport des produits depuis l'ouverture d'alimentation vers la boîte de transfert.

Le châssis du transporteur est doté d'organes de roulement sur le sol ainsi que d'un timon d'attelage à un véhicule tracteur.

Selon la forme préférée de réalisation, le transporteur comporte un dispositif 1 d'alimentation en produit, en relation de communication avec l'ouverture d'alimentation que comporte le convoyeur. Préférentiellement, le dispositif d'alimentation 1 est une trémie.

Dans la forme préférée de réalisation, l'élément mobile à alvéoles que comporte le convoyeur 2 est constitué d'une chaîne sans fin 9 pourvue de plusieurs disques régulièrement espacés 90, formant cloisons de séparation ainsi que piston, ces disques déterminant des alvéoles consécutifs. La chemise tubulaire 10 dans laquelle évolue la chaîne sans fin 9, s'étend entre l'aval de la trémie 1 et l'amont de la boîte de transfert 3 et détermine avec les alvéoles de la chaîne 9 des cellules consécutives de transport des produits depuis la trémie 1 vers la boîte de transfert 3.

La chaîne de transport sans fin 9 est montée en tension entre au moins une roue menante 95 et au moins une roue menée 96. Cette chaîne 9 est préférentiellement formée par des maillons articulés 97 longiformes, d'égales longueurs recevant chacun en fixation un disque 90. Comme on peut le voir chaque disque 90 se développe de manière perpendiculaire par rapport à au maillon qui le porte. Chaque disque 90 est formé d'un corps de disque 91 et d'une garniture d'étanchéité 92 formant une saillie annulaire sur la périphérie du corps de disque, cette garniture d'étanchéité 92 sous l'effet d'efforts radiaux pouvant se rétracter dans le corps du disque. Avantageusement, le corps de disque 91 est formé de deux flasques parallèles solidaires l'un de l'autre, entre lesquels est montée la garniture d'étanchéité 92, cette dernière se présentant sous la forme d'un disques. Avantageusement la garniture d'étanchéité 92 est montée entre les deux flasques de manière à pourvoir se contracter librement de manière radiale.

Les roues menante 95 et menée 96 sont guidées dans des paliers à billes fixés au bâti. La roue menante 95 est accouplée à un organe moteur d'entraînement en rotation 40. Cet organe moteur 40, sans que cela soit limitatif, peut être un moteur hydraulique doté d'un arbre de sortie rotatif par lequel il sera accouplé à la roue menante 95 afin de lui communiquer un couple d'entraînement.

Le moteur hydraulique 40, d'un type connu, sera alimenté en huile par l'intermédiaire d'un distributeur 20 hydraulique piloté électriquement ou d'une autre manière, du type trois positions. La première position du distributeur correspond à une position neutre selon laquelle aucun flux d'huile n'est dirigé vers le moteur 40. La deuxième position du distributeur 20 correspond à un écoulement d'huile dans le moteur 40 selon un premier sens correspondant à un sens de manche avant du moteur 40 et la troisième position correspond à un écoulement d'huile dans le moteur 40 selon un sens opposé correspondant à un sens de marche arrière du moteur.

La chaîne 9 forme deux segments rectilignes opposés joints l'un à l'autre par deux segments courbes opposés correspondant à l'enroulement de la chaîne sur les roues menante et menée. L'un des segments rectilignes de la chaîne sans fin 9 traverse de part en part la trémie 1 et pénètre dans cette dernière par un perçage traversant amont 1a et en ressort par un perçage traversant aval 1b. L'autre segment rectiligne de la chaîne 9 traverse de part en part la boîte de transfert 3 et la chambre 4 de cette dernière et pénètre dans la chambre 4 par un perçage traversant amont 3a et en ressort par un perçage traversant aval 3b.

Avantageusement chaque roue menante 95 et menée 96 présente une forme de moyeu 98 de laquelle rayonne des dents d'entraînement 99 aptes à coopérer en emboîtement de terme avec les maillons de la chaîne. Chaque dent d'entraînement comprend en extrémité une forme épaulée 99b prévue pour s'engager dans le maillon 97 de la chaîne, ladite forme épaulée étant bordée latéralement par deux épaulements 99c. Chaque maillon 97 de la chaîne comprend deux flancs parallèles 97a écartés l'un de l'autre et réunis l'un à l'autre par deux axes 97b. Par ses deux flancs le maillon vient de part et d'autre de la forme épaulée 99b et par ses deux axes vient porter sur les deux épaulements latéraux.

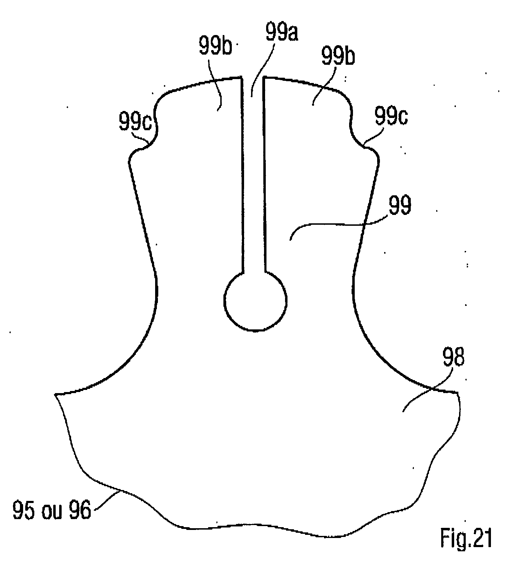

Pour éviter des dysfonctionnements et des usures prématurées des dents 99 en raison de coincement de produits entre les dites dents et la chaîne, chaque dite dent 99 est dotée d'une fente radiale 99a lui conférant une aptitude de déformation élastique selon sa largeur. Une telle disposition est représentée en figure 21.

La chemise 10 du convoyeur, entre les parties coudées, que forme la chaîne est constituée par des éléments tubulaires de forme cylindrique. Au niveau de chacune des parties coudées, la chemise est agencée en caisson sensiblement de forme hémicylindrique. Chaque caisson détermine une chambre interne recevant l'une des roues 95, 96 du convoyeur. Les parties tubulaires de la chemise sont raccordées de manière étanche à ces deux caissons.

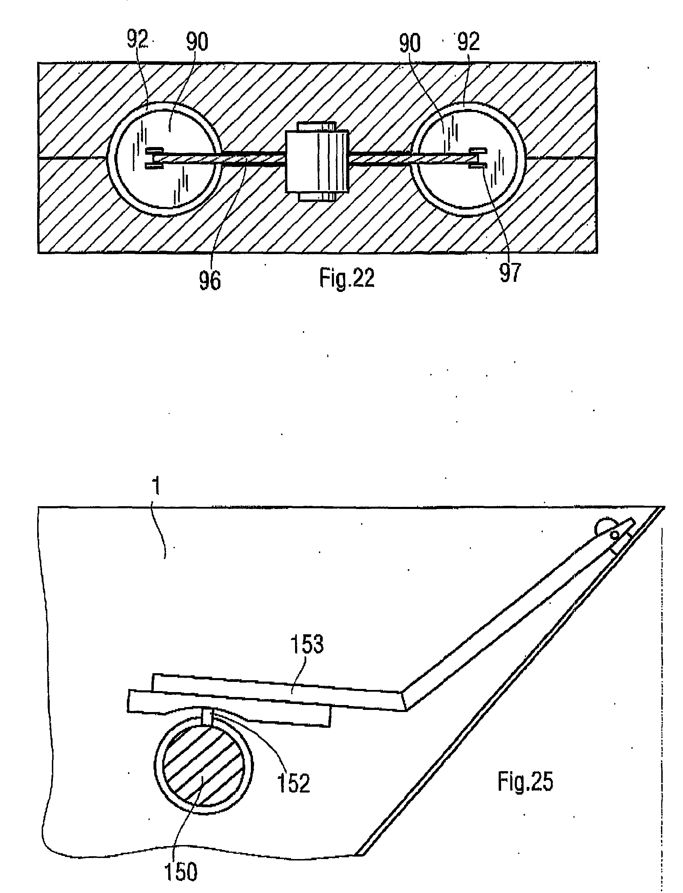

La chemise 10 au niveau de chaque partie coudée pourra se présenter sous la forme d'un tore se développant selon un arc de circonférence de cercle égal à II radians, ce tore selon son plan équatorial étant doté d'une fente de passage des dents de la roue menante ou menée correspondante. Le diamètre du tore est équivalent à celui de chaque disque de la chaîne sans fin 9. Dans la pratique, la chemise au niveau de chaque partie coudée sera formée dans le caisson, ce dernier, selon cette forme de réalisation, est formé par assemblage étanche de deux demi-coquilles selon le plan équatorial du tore. Une telle disposition est représentée en figure 22.

La trémie 1 est dotée en partie inférieure d'une forme de goulotte horizontale dans laquelle évolue le segment correspondant de la chaîne sans fin 9. Cette forme de goulotte s'étend depuis le perçage traversant la jusqu'au perçage traversant 1b.

Conformément à l'un des aspects de l'invention, le transporteur, en amont de la chambre de transfert 3 et en aval de la trémie 1, sur le trajet de la chaîne de transfert, est doté d'au moins un dispositif d'introduction progressive. Préférentiellement, ce dispositif d'introduction progressive 12 est logé dans la forme de caisson correspondante et selon une première forme de réalisation prolonge axialement la partie tubulaire de la chemise raccordée à ce caisson. Selon une seconde forme de réalisation, adaptée à une chemise 10 présentant un coude de forme torique, le dispositif d'introduction 12 est toujours logé dans la forme de caisson mais est placé immédiatement en sortie de trémie.

Le dispositif d'introduction progressive 12 présente un orifice d'introduction 12a se développant de manière oblique par rapport à la direction du mouvement de l'élément mobile 9 au travers du dit orifice 12a. En raison de cette disposition les produits transportés seront introduits progressivement dans la partie tubulaire de la chemise 10. Préférentiellement le bord de cet orifice d'introduction 12a est avive de façon que des corps étrangers tel que des bouts de bois et autres puissent être cisaillés par ledit bord. Cette disposition est propice encore à diminuer le risque de formation de bouchon à ce niveau.

Avantageusement, le dispositif d'introduction 1.2 est agencé en entonnoir radialement expansible apte à comprimer le produit transporté par les alvéoles de la chaîne en vue d'en réduire le volume et le degré de foisonnement avant introduction dans la chambre de transfert 3. La chaîne de transfert 9 traverse longitudinalement le dispositif d'entonnoir 12. Ce dispositif d'introduction sous forme d'entonnoir comporte au moins une paroi souple 15 élastiquement déformable.

Selon une forme préférée de réalisation, le dispositif d'entonnoir est constitué d'un corps tubulaire rigide 13 de section droite circulaire comprenant l'orifice d'introduction 120 sus évoqué, d'une paroi rigide mobile 14 disposée en regard de cet orifice d'introduction et d'une paroi souple 15 fixée d'une part au corps tubulaire 13 et d'autre part à la paroi mobile 14 laquelle est maintenue à écartement du corps tubulaire tant longitudinalement que radicalement par un mécanisme support 16 autorisant le déplacement radial de ladite paroi 14 à l'encontre de forces de rappel en position.

L'orifice d'introduction est formé par biseautage du corps tubulaire 13.

Le corps tubulaire 13 est en relation de communication avec l'orifice amont 3a de la boîte de transfert 3 par l'intermédiaire de la chemise tubulaire et est fixé à cette dernière par soudage ou autre moyen. Le diamètre interne du conduit tubulaire correspond au diamètre externe de chaque disque de la chaîne sans fin ou bien, en variante, est inférieur de un à deux millimètres au diamètre du conduit tubulaire.

La paroi mobile 14 de forme cintrée présente une région amont formant évasement de façon à faciliter la pénétration des disques de la chaîne et du produit transporté. Le mécanisme support 16 est constitue de plusieurs pions filetés fixés à la paroi 14 et formant saillie sur cette dernière, d'au moins une platine support fixée au bâti du transporteur, laquelle comporte des perçages traversants dans lesquels sont engagés librement les pions filetés, lesquels, au-dessus de la platine, reçoivent des écrous de réglage et par des organes élastiques montés en compression entre la platine et la paroi. Par vissage ou dévissage des écrous sur la tige, est ajustée la position angulaire de la paroi rigide 14 par rapport à l'axe longitudinal du dispositif entonnoir 12 ainsi que le degré de compression des ressorts et par voie de conséquence le degré de compression du produit dans ce dispositif. Ce mécanisme support autorise cependant le mouvement radial de la paroi 14 dans le sens de son écartement par rapport au corps tubulaire afin de pouvoir notamment absorber les surépaisseurs que peut créer le produit fibreux en venant en recouvrement du bord externe circulaire du disque 90.

Selon la forme préférée de réalisation, la paroi souple 15 est réalisée en caoutchouc et est fixée au corps tubulaire et à la paroi rigide 14 par des brides 17 sous forme de parois cintrées. En variante, cette paroi souple 15 est fixée par collage, par vulcanisation et autre.

Selon une autre forme d'exécution, le dispositif d'entonnoir 12 est entièrement réalisé en matériau souple élastiquement déformable.

Avantageusement, en aval de l'orifice d'introduction, le corps tubulaire 13 du dispositif d'entonnoir 12 ou la chemise 10 entre ce corps tubulaire 13 et la boîte de transfert 3 comporte au moins une fente 101 se développant de manière oblique par rapport aux génératrices du corps tubulaire ou de la chemise afin d'imprimer à la masse de matière fibreuse lors de son passage un mouvement de vissage. La fente 101 peut être recouverte par une paroi souple 102 élastiquement déformable fixée par tous moyens connus, au corps tubulaire ou à la chemise selon qu'elle est formée dans ledit corps ou dans ladite chemise. Dans la forme de réalisation, la fente est pratiquée dans la conduite et la paroi souple est maintenue sur la conduite par une bride.

Comme on peut le voir la fente présente au moins deux segments de fente 101a et 101b présentant des sens d'oblicité alternés. Une telle disposition communique à la masse de matières fibreuses, un mouvement de vissage dans un sens puis un mouvement de vissage dans l'autre.

Selon une autre forme de réalisation, la chemise 10 entre la boîte de transfert 3 et le dispositif d'introduction 12 est radialement expansible et est constitué de trois éléments de parois métalliques 103 cintrés, liés les uns aux autres par une gaine tubulaire élastiquement déformable 104. Une telle disposition est propice à éviter la formation de bouchons dans cette partie de chemise. Les éléments de paroi cintrés, en l'absence de contraintes internes à la chemise, viennent par leur extrémité en contact les uns contre les autres sous l'effet des forces de rappel générées par la gaine élastique 104.
Les éléments de parois cintrées 103 et la gaine 104 pourront être disposés dans un manchon métallique 105 déterminant avec lesdits éléments de parois cintrés et la gaine 104, une chambre dans laquelle règne une contre-pression pneumatique. Préférentiellement cette chambre est alimentée en air sous pression préférentiellement par un piquage raccordée à la conduite d'alimentation en air sous pression de la chambre de transfert 3.

Selon la forme préférée de réalisation, en sortie de la trémie de stockage 1 est prévu un dispositif d'évasement 17 dans lequel la masse de produit transporté par chaque cellule, comprimée par son passage dans l'orifice de sortie la de la trémie 1, peut se dilater sous l'effet des forces élastiques internes.

Pour réduire les coûts de fabrication, un tel dispositif d'évasement sera identique au dispositif d'introduction sous forme d'entonnoir, mais sa position par rapport au sens de marche de la chaîne sera inversée.

Ces deux dispositifs, tels que décrits, ont pour but de réduire le risque de coincement du produit au niveau de l'orifice amont 3a de la boîte de transfert 3.

Avantageusement afin que le transporteur puisse reprendre de manière autonome la distribution des produits après formation d'un bourrage et éventuellement d'un arrêt de chaîne, est prévu, selon un des aspects principaux de l'invention, un moyen 100 apte à détecter des conditions de blocage de l'élément mobile 9 du convoyeur et apte à émettre un signal de défaut si ces conditions sont détectées, un moyen de commande 110 associé électriquement ou d'une autre manière au moyen de détection, ce moyen de commande, si le signal de défaut est émis, étant apte à commander le sens de marche inverse de l'élément mobile de transport 9 et ce pendant une durée déterminée donnée par un moyen de temporisation 120 associé électriquement ou d'une autre manière au moyen de commande 110. Au terme de la période de temporisation, le moyen de commande 110 commandera la marche de l'élément mobile dans son sens normal de déplacement

Cette disposition de marche arrière et avant de l'élément mobile 9 sur une distance réduite déterminée par la temporisation permet de déstructurer un bouchon formé en amont de la chambre de transfert. Il y a lieu aussi de noter que lors de la reprise de la marche avant de l'élément mobile de transport 9 ce dernier, par celle de ses cloisons 90 de séparation située en amont du bouchon percute ce dernier de manière relativement violente ce qui permet soit de le déstructurer soit de le déplacer vers la chambre de transfert.

Le moyen de commande est de préférence associé électriquement au moyen de détection, mais il va de soi que selon la nature des composants utilisés cette association pourra être du type pneumatique, hydraulique ou mécanique.

Selon une première forme de réalisation, le moyen 100 apte à détecter des conditions de blocage de l'élément mobile du convoyeur est apte à mesurer la puissance consommée pour l'entraînement de l'élément mobile 9 du convoyeur, et est associé à un moyen de comparaison 130 apte à comparer la valeur mesurée à une valeur de consigne et à émettre un signal de défaut si la valeur mesurée est supérieure à la valeur de consigne, le moyen de commande 110, si le signal de défaut est émis, commandant alors le sens de marche inverse de l'élément mobile de transport 9 et ce toujours pendant une durée déterminée donnée par le moyen de temporisation 120 associé électriquement ou d'une autre manière au moyen de commande. Au terme de cette période de temporisation, le sens normal de marche de l'élément mobile 9 sera rétabli par le moyen de commande 110.

La puissance consommée peut être mesurée par diverses manières connues de l'homme de l'art. Si le l'élément mobile est entraînée directement par un organe moteur électrique, la puissance consommée pourra être déterminée par mesure de l'intensité du courant électrique d'alimentation de ce moteur. Si le moteur d'entraînement est un moteur hydraulique, la puissance consommée pourra être déterminée par mesure de la pression fluide hydraulique d'alimentation de ce moteur. Ainsi sera utilisé un pressostat 30 disposé sur le circuit hydraulique d'alimentation du distributeur 20 de commande du moteur hydraulique d'entraînement 40 de la chaîne. Ce pressostat 30, lorsque la pression parvient au seuil prédéterminé, génère une impulsion électrique sur le pilote correspondant du distributeur 20 de façon à inverser le sens de marche du moteur 40 et ce pendant la durée déterminée par le moyen de temporisation 130. Au terme de cette durée, une impulsion électrique sera générée sur l'autre pilote de façon à ramener le distributeur dans une position d'alimentation du moteur en marche avant.

Selon encore une variante d'exécution, le moyen 100 apte à détecter des conditions de blocage de l'élément mobile 9 du convoyeur est apte à mesurer la valeur de la vitesse de déplacement de l'élément mobile 9 du convoyeur ou d'un organe cinématiquement lié à l'organe mobile et est associé à un moyen de comparaison 130 apte à comparer la valeur mesurée à une valeur de consigne et à émettre un signal de défaut si la valeur mesurée est inférieure à la valeur de consigne. Si le signal de défaut est émis le moyen 110 commande alors le sens de marche inverse de l'élément mobile de transport 9 et ce toujours pendant une durée déterminée donnée par le moyen de temporisation 120 associé électriquement ou d'une autre manière au moyen de commande. Au terme de la période de temporisation, le moyen 110 commandera la marche de l'élément mobile de transport dans son sens normal.

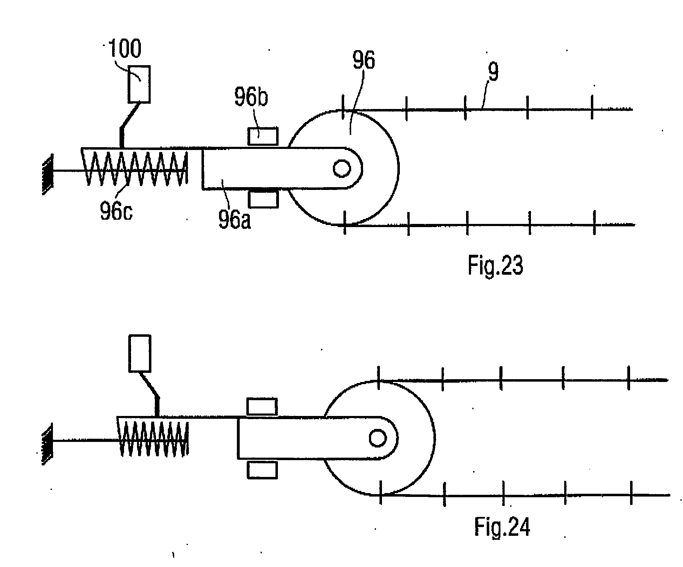

Selon une variante d'exécution comme représentée schématiquement en figures 23 et 24, le moyen apte à détecter les conditions de blocage de l'élément mobile 9 est l'un au moins des organes de cet élément préférentiellement l'une au moins des roues menante ou menée 96, et à cet effet ladite roue 96 par son palier de guidage en rotation 96a est montée dans un élément de guidage en translation 96b et est déplaçable en translation dans cet élément de guidage à l'encontre de l'action d'un organe élastique 96c de mise en tension de la chaîne, un blocage de la chaîne ou un effort anormal sur cette dernière conduisant au déplacement de ladite roue (fig. 24). Ce déplacement se produit donc dans des conditions de blocage et matérialise le signal de défaut Le moyen de commande 100 sera apte à détecter ce déplacement en translation de la roue et à commander l'inversion du sens de marche de la chaîne. A cet effet ce moyen de commande 100 pourra être disposé sur la trajectoire du palier de guidage 96a ou d'un élément porté par ce dernier et agira sur le moteur d'entraînement de la roue menante ou sur le circuit de commande de ce dernier. Le moyen de commande 100 pourra être un contacteur électrique, pneumatique ou hydraulique ou bien un distributeur approprié du type hydraulique ou pneumatique, ou bien encore ce moyen pourra être un inverseur mécanique de sens de rotation.

Avantageusement, la trémie 1 est dotée d'un ou plusieurs rotors 150 ayant pour vocation de déchiqueter, de démêler des balles de produit fibreux compressées telles que balles de paille ainsi que de dévouter la masse de ce produit contenue dans la trémie et de gaver la chaîne. L'un au moins de ces rotors aura pour fonction de gaver les alvéoles de l'élément mobile de transport 9. Ce ou ces rotors seront accouplés à un moteur d'entraînement associé à un moyen de commande. Ce moyen de commande dès qu'un signal de défaut est émis par le moyen 100 apte à détecter des conditions de blocage de l'élément mobile 9, arrête le moteur d'entraînement du rotor dévouteur gaveur pendant une période de temps déterminée et l'active de nouveau si pendant cette période aucun autre signal de défaut n'a été émis.

Dans la pratique, le ou chaque rotor démêleur déchiqueteur, dévouteur et gaveur 150 est constitué par un arbre horizontal monté par ses extrémités dans des paliers à bille fixés à la trémie et par des couteaux déchiqueteurs démêleurs fixés radialement à l'arbre horizontal. Extérieurement à la trémie, l'arbre du rotor est accouplé à un organe moteur 60 par exemple un moteur hydraulique alimenté en huile par un distributeur hydraulique 50 trois positions, piloté électriquement par exemple. La première position du distributeur correspondra à une position neutre selon laquelle aucun flux d'huile n'est dirigé vers le moteur. La deuxième position du distributeur correspondra à un écoulement d'huile dans le moteur selon un premier sens d'écoulement correspondant à un sens de marche avant du moteur 60 et la troisième position correspond à un écoulement d'huile dans le moteur selon un sens opposé correspondant à un sens de marche arrière du moteur 60.

Le pressostat 30 commande aussi un deuxième moyen de temporisation en même temps que le premier moyen de temporisation. Pendant le temps de temporisation, le distributeur 50 est placé en position neutre de façon à interrompre temporairement la rotation du rotor démêleur déchiqueteur et à éviter ainsi toute alimentation de la chaîne en produit.

Avantageusement au distributeur 50 est associé un pressostat 70. Lorsque la pression hydraulique du circuit d'alimentation du moteur 60 dépasse un seuil déterminé, le pressostat génère une impulsion électrique sur le pilote correspondant du distributeur et inverse la position de ce dernier. Ainsi chaque hausse de pression dans le circuit hydraulique se traduit par l'inversion du sens de rotation du rotor. En variante à chaque hausse de pression le pressostat 70 inverse le sens de rotation du rotor et active une temporisation. Au terme de la durée déterminée par la temporisation, le sens de rotation préférentiel du rotor sera rétabli.

A l'un au moins des rotors 150 seront associés des batteurs 153 aptes à détruire les voutes de produits ou s'opposer à leur formation. A cet effet le rotor 150 sera doté de doigts d'actionnement 152 qui peuvent être constitués par les couteaux déchiqueteurs démêleurs que comporte le rotor et sera associé à des batteurs 153 articulés à la paroi de la trémie 1 venant reposer à distance de leurs articulations, sur le rotor 150 et plus particulièrement sur la trajectoire des doigts d'actionnement 152. Cette disposition, lorsque le rotor est entraîné en rotation anime les batteurs d'un mouvement circulaire de monte et baisse dans la trémie apte à détruire les voutes formées.

Le transporteur, selon l'invention, peut être équipé en aval du dispositif d'entonnoir 12, en relation de communication avec le volume interne de la chemise, d'au moins un distributeur 200 de produits additionnels qui peuvent être des copeaux de bois, des granulés et autres produits à adjoindre au produit transporté. Ce distributeur 200, connu en soi, par leur ouverture de délivrance seront disposés en relation de communication avec une ouverture pratiquée dans la chemise 10 du convoyeur. À l'ouverture de délivrance que comporte le distributeur, sera associée une trappe 210 actionnée par un organe moteur non représenté entre une position d'ouverture et une position de fermeture. En variante, la trappe sera remplacée par une vis de dosage.

Additionnellement ou alternativement, les produits additionnels pourront être contenus dans un ou plusieurs compartiments de la trémie de stockage, ces compartiment formant distributeurs 200, ou bien dans une ou plusieurs trémies annexes, ces compartiments ou trémies étant en relation de communication avec la chaîne 9 par l'intermédiaire de moyens de distribution commandés de façon que les pourcentages respectifs des produits additionnels, à adjoindre au produit de litière au cours d'une même distribution puissent être ajustés aux besoins et caractéristiques de l'élevage- Ces produits pourront être des matériaux solides d'additions et de compléments. Les moyens de distribution aptes à puiser dans les compartiments ou trémies, les produits adjoindre et à les distribuer à la chaîne pourront être constitués chacun par une vis d'Archimède entraînée en rotation par mécanisme moteur pouvant être soit indépendant du mécanisme d'entraînement de la chaîne ou bien couplée cinématiquement à ce dernier. Un de ces compartiments ou trémies pourra être dédié à la distribution d'additif en petite quantité, ces produits pouvant être des asséchants, des micro-organismes tels que levures ou bactéries et autres produits.

La source d'air sous pression 7 pourra être constituée par une soufflante connue en soi portée par le bâti du transporteur. Cette soufflante présente un orifice d'aspiration d'air qui peut entre associé à une grille et un orifice de refoulement de l'air sous pression en relation de communication étanche avec une conduite d'alimentation de la boîte de transfert. Cette conduite d'alimentation est en relation de communication étanche avec l'orifice 6 que comporte la boîte de transfert 3.

Selon une forme préférée de réalisation, une partie de l'air comprimé est dérivée par un piquage et est introduite dans la chemise 10 du convoyeur immédiatement en aval de la boîte de transfert. Cet air sous pression a pour but de chasser vers la chambre de transfert 4 le produit encore présente dans les alvéoles de la chaîne.

Avantageusement le transporteur comporte au moins un réservoir de stockage 300 d'un produit liquide de traitement qui peut être de l'eau ou un produit phytosanitaire, au moins un moyen de pompe 301 pour puiser ce produit et au moins un moyen de pulvérisation 302 pour pulvériser ces produits liquides dans le flux d'air de transport, ledit moyen de pulvérisation recevant du moyen de pompe le produit à pulvériser.

Le produit phytosanitaire peut être pulvérisé dans la boîte de transfert 3 ou en amont de cette dernière ou encore en aval. Le moyen de pulvérisation 302 peut être une buse de pulvérisation connue en soi apte à former un brouillard. Le liquide à pulvériser est introduit dans la buse par le moyen de pompe 301. En variante le réservoir 300 sera pressurisé à l'aide d'un gaz neutre vis-à-vis du liquide contenu dans le réservoir. Sous l'effet de cette pressurisation, le liquide sera introduit dans la buse de pulvérisation. Avantageusement seront prévus plusieurs réservoirs de produits de traitement et une ou plusieurs buses de pulvérisation.

Certains de ces produits de traitement ont pour but de détruire tous les germes que peuvent être présents dans le produit transporté et qui peuvent s'avérer dangereux pour la santé des animaux d'élevage. Il lieu de noter que ces produits grâce aux tourbillons d'air qui se forment dans la conduite de transport pénètrent en profondeur la masse de produit transporté. Une telle disposition accroît de manière notable l'efficacité du traitement.

Additionnellement sera prévu un réservoir contenant un produit, connu en soi, apte à agglomérer les poussières que peuvent véhiculer tant le produit que le flux d'air de transport. Grâce à ce produit, lors de la distribution du produit, peu de poussière sera générée. Ce produit, sans que cela soit limitatif peut être de l'eau.

Il est important que la valeur du débit de la pulvérisation dépende de la vitesse de l'élément mobile 9 et donc de la vitesse de délivrance des produits fibreux à la boîte de transfert. À cet effet, le moyen de pompe 301 est actionné par l'organe moteur 40 d'entraînement de l'élément mobile 9.

Préférentiellement, le moyen de pompe 301 est une pompe aspirante refoulante à piston linéaire avec tige de manoeuvre, mobile dans un corps cylindrique et déterminant avec ce dernier une chambre avant et une chambre arrière tour à tour aspirante et refoulante. Chacune des chambres est dotée d'un orifice d'aspiration avec clapet anti-retour, connecté par une conduite au réservoir 300 et un orifice de refoulement avec clapet anti-retour connecté au moyen de pulvérisation 302, cette buse, préférentiellement, étant en relation de communication avec la boîte de transfert 3.

Avantageusement, la pompe 301 par son corps est articulée à un point fixe du châssis du transporteur et par la tige du piston est articulée à une bielle d'entraînement 303 accouplée à l'arbre de sortie rotatif du moteur d'entraînement 40. La position du point d'articulation de la tige du piston de la pompe à la bielle 303 est ajustable en éloignement ou en rapprochement de l'arbre de sortie du moteur afin d'ajuster l'amplitude du mouvement de pompage et de refoulement du piston dans le corps cylindrique.

Selon une forme préférée de réalisation, le transporteur comporte un moyen de contrôle de la pression d'air dans la conduite d'alimentation en air de la chambre de transfert 3. Ce moyen de contrôle tel un pressostat est apte à émettre un signal de défaut si la valeur de la pression atteint ou dépasse un seuil préétabli, le mouvement de la chaîne 9 du convoyeur étant ralenti ou interrompu à partir de l'apparition de ce signal de défaut et la marche normale de la chaîne 9 étant rétablie à partir de la disparition de ce signal de défaut. Avantageusement le signal de défaut sera appliqué sur le moyen de commande 110.

Avantageusement, selon la forme préférée de réalisation, sont déterminés deux seuils de pression. Le dépassement du premier seuil de pression engendre le mouvement de la chaîne du convoyeur en vitesse lente, et le franchissement du second seuil de pression engendre l'arrêt de la chaîne 9. Dès disparition du signal de défaut, la chaîne de transfert sera de nouveau mise en mouvement.

Le pressostat est connecté électriquement par exemple, au moyen de commande 110 du moteur 40, ce moyen assurant la commande du moteur d'entraînement de la chaîne 9 soit selon une vitesse normale soit selon une vitesse lente.

Selon une variante d'exécution, le moyen de contrôle de pression d'air est apte à délivrer un signal électrique d'intensité proportionnelle à la valeur de la pression d'air et le moyen de commande 110 est apte à réduire la vitesse de rotation de l'arbre de sortie du moteur de manière inversement proportionnelle à la valeur de l'intensité de ce signal.

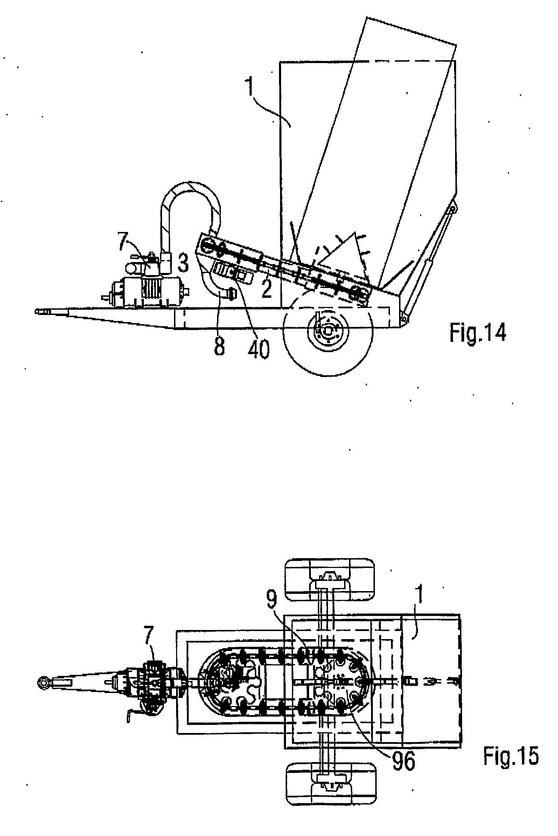

En figures 14 et 15 est représenté un transporteur selon une variante d'exécution. Selon cette variante, la trémie 1 est intégralement disposée au-dessus de l'une des roues par exemple la roue entraînée de la chaîne 9 et cette roue porte un rotor déchiqueteur sous forme de cône. Dans cette forme de réalisation, la chaîne 9 au niveau de chacune des roues est mobile dans une chambre délimitée par un carter à laquelle sont raccordés deux tronçons de chemise. Dans cette forme de réalisation, la boîte de transfert 3 peut être disposée en relation de communication avec la chambre dans laquelle évolue la roue motrice.

Le transporteur tel que décrit dans ses diverses formes de réalisation peut être du type à poste fixe mais de préférence son châssis est équipé d'un train de roues et d'un timon de tractage si les roues ne sont pas motorisées. Il est évident que ce transporteur peut être automoteur.

Ce transporteur est avantageusement destiné au paillage des locaux d'élevage et pour cette opération peut demeurer à l'extérieur du bâtiment. L'intérêt de cette disposition est de permettre notamment le paillage en présence des animaux.
Pour cet épandagc du produit tel que de la paille dans un local d'élevage, la conduite de transport pneumatique pourra être connectée à un dispositif d'épandage 500 supporté par un chariot mobile 501 sur un rail 502 suspendu dans le local d'élevage. Ce dispositif d'épandage 500 pourra être constitué par exemple par un canon oscillant. Le canon sera équipé d'un axe de pivotement vertical engagé dans un palier lisse supporté par le chariot 501. Le chariot 501 sera équipé d'un organe moteur d'entraînement d'un plateau manivelle 503 doté d'un maneton 504 engagé dans une coulisse 505 solidaire du canon.

Le dispositif d'épandage pourra être constitué aussi d'un disque de projection rotatif.

Le chariot est également équipé d'organes de roulement par lesquels il est suspendu au rail support et par lesquels il est guidé sur ces rails. Le chariot sera de plus doté d'un organe moteur d'entraînement d'un galet de friction 506 en prise avec le rail de guidage.

La conduite de transport pneumatique 8 pourra aussi être connectable par un raccord rapide à une conduite souple préinstallée dans le local d'élevage et supportée de manière électriquement isolée par des chariots portés par le rail de guidage 502. Plus précisément, la conduite souple sera portée par des liens attachés aux chariots et ne sera pas en contact avec ces derniers si ceux ci sont en une matière conductrice de l'électricité. Les liens seront en une matière électriquement isolante.
Cette conduite souple en matériau synthétique sera avantageusement non traitée contre l'électricité statique de façon que lors du transport du produit et notamment de la paille, des phénomènes d'électricité statique puissent apparaître sur les parois de cette dernière et retenir dans une certaines mesures les poussières transportées par le produit. Ainsi d'une manière particulièrement simple on réalise un dépoussiérage total ou partiel du produit transporté.

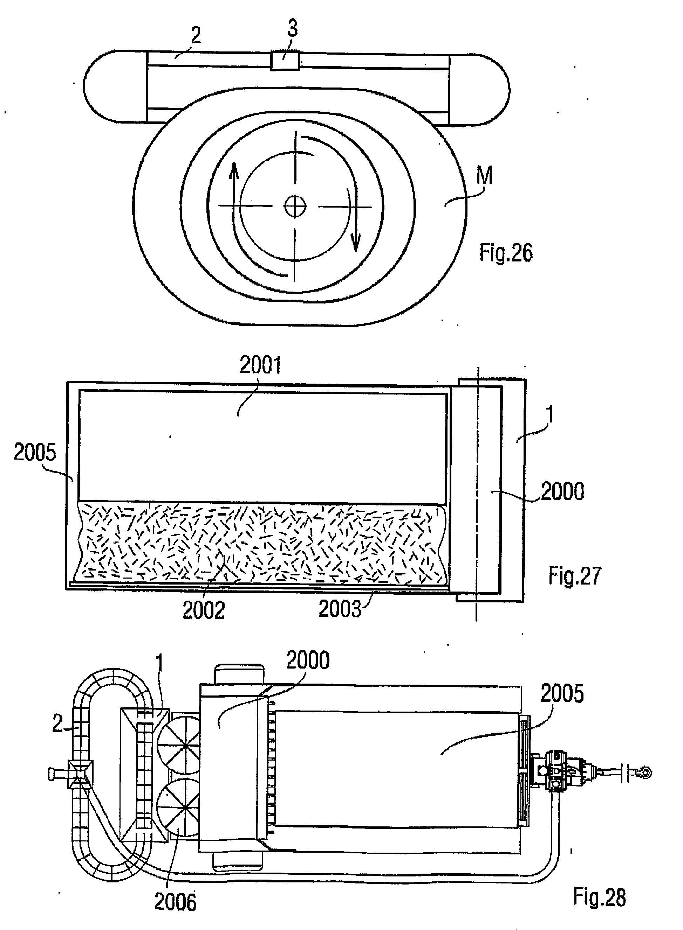

Le transporteur tel que décrit peut avantageusement équiper une pailleuse conforme à la demande de brevet FR 05 09 291 des demandeurs. Il peut également équiper toute autre machine apte à délivrer des produits fibreux et autres. Ainsi le transporteur comme on peut le voir en figure 26 pourra être associé par exemple à une mélangeuse à vis verticale et par sa trémie de chargement 1 pourra être disposé sous la trappe de délivrance de produits que présente la cuve de cette mélangeuse.

Le transporteur pourra également être associé à une machine de broyage de pailles et autres ou bien faire partie intégrante de cette dernière. Il pourra dans ce cas être disposé à poste fixe et placé par sa trémie sous la bouche de délivrance de produits broyés d'une machine de broyage.

Il pourra aussi porté par une machine de broyage ou déchiquetage ou démêlage de paille et autres produits. Les figures 27 et 28 montrent deux de ces machines.

La machine, mobile selon la figure 27 sera équipée d'une part d'un plateau 2005 adapté à recevoir des balles de pailles 2001 et des produits d'addition 2002 par exemple des copeaux de bois et d'autre part à l'une des extrémités du plateau, d'un dispositif de démêleur 2000 sous forme de rouleau par exemple apte à délivrer à la trémie 1 du transporteur, de la paille démêlée et des copeaux. On peut voir sur cette figure que les copeaux sont disposés dans un volume définis par l'une des faces longitudinales de la balle de paille 2001 et par une ridelle 2003 disposée au-dessus du plateau à très faible distance de ce dernier. Cette machine sera équipée d'un moyen pour amener la botte de paille et le tas de copeaux au rouleau démêleur. Ce moyen peut être un système poussoir ou bien être constitué par le plateau lui-même ce dernier étant agencé en un élément sans fin apte à tourner sur lui-même. Ainsi il pourra être constitué par un tapis sans fin monté en tension entre deux rouleaux d'extrémité ou bien par des chaînes montées en tension entre des roues menantes et menées et portant à intervalles constants des éléments transversaux d'entraînement.

La machine objet de la figure 28 comprend les mêmes éléments que celle objet de la figure 27 avec en plus des disques de projection 2006.

Le transporteur tel que décrit pourra également être doté de moyens propres d'épandage de la paille et autre produit connu en soi. Ces moyens pourront être par exemple des canons oscillants des disques centrifuges ou des cyclones.

De plus le transporteur pourra recevoir des aménagements spécifiques à la nature du produit à transporter et à distribuer. Ainsi pour ce qui concerne des produits sous forme pulvérulente ou sous forme de granulés, la trémie 1 sera équipée de moyens pour contrôler et/ou calibrer la quantité de matière à distribuer au convoyeur mécanique 2 de façon qu'il ne puisse recevoir plus de matière qu'il ne peut en transporter sans bourrage.

Selon une première forme de réalisation représentée en figure en zone aval de la trémie 1 ou en sortie de trémie et en amont du coude que forme le convoyeur, est prévue une boîte de prélèvement 1100 dans laquelle le produit en excès peut s'écouler librement, cette boîte de prélèvement étant en relation avec un dispositif de transport 1101 de ces produits vers la trémie 1 et vers la zone amont de cette dernière. Ce dispositif de transport 1101 sera constitué par une vis sans fin souple, motorisée, monté dans une gaine tubulaire souple connectée par une de ses extrémités à la boîte do prélèvement. L'autre extrémité de la gaine est dotée d'un orifice de décharge des produits prélevés dans la boîte de prélèvement. Par cet orifice elle est positionnée au dessus de la zone amont de la trémie.

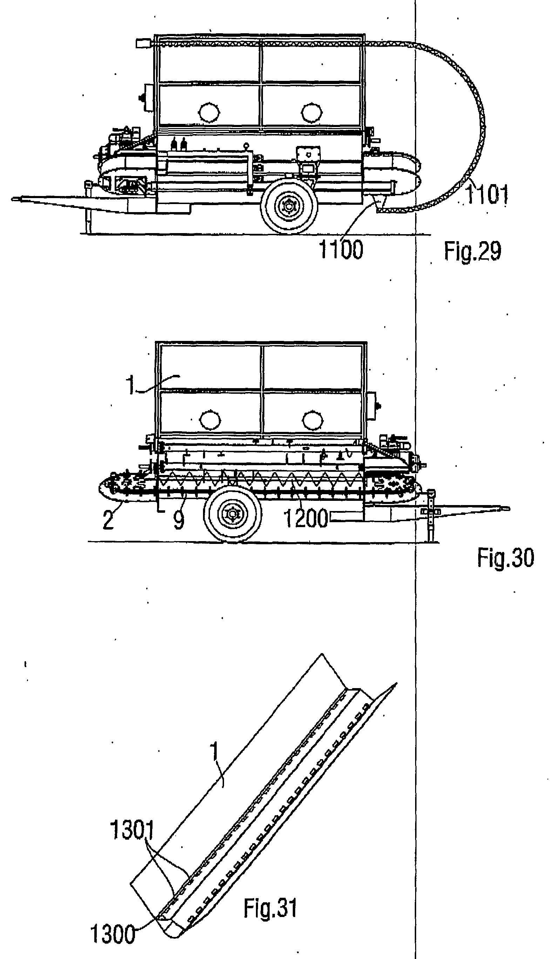

Selon une deuxième forme de réalisation représentée en figure 30, la trémie 1 est doté en partie inférieure d'une vis sans fin horizontale 1200, motorisée, apte à ramener le produit de la zone aval de la trémie 1 vers la zone amont.

Selon une troisième forme de réalisation, telle que représentée en figure 31, la trémie 1, au-dessus du convoyeur 2, suivant toute la longueur de la partie de ce dernier située dans la trémie et distance de ladite partie, reçoit une couverture rigide 1300 formant dôme, des ouvertures 1301 de passage du produit étant prévues dans la couverture ou le long de cette dernière. Cette couverture en forme de dièdre sera constituée d'une tôle métallique positionnée à la demande dans la trémie. Par ses bords longitudinaux, cette tôle métallique pourra être maintenue à écartement des flancs de la trémie 1 afin de former des ouvertures 1301 de passage du produit vers le fond de la trémie, ou bien reposera, par ses bords longitudinaux contre les flancs de la trémie et sera dotée d'ouvertures de passage du produit vers le fond du convoyeur 2. Ces ouvertures 1301 peuvent être formées par des crénelures ménagées sur les bords longitudinaux du dièdre. Ce dôme pourra être engagé dans la trémie par passage au travers d'une lumière en Vé formée dans l'un des flancs au moins de la trémie. Ce dôme reposera dans la trémie sur tout support approprié que comportera cette dernière.

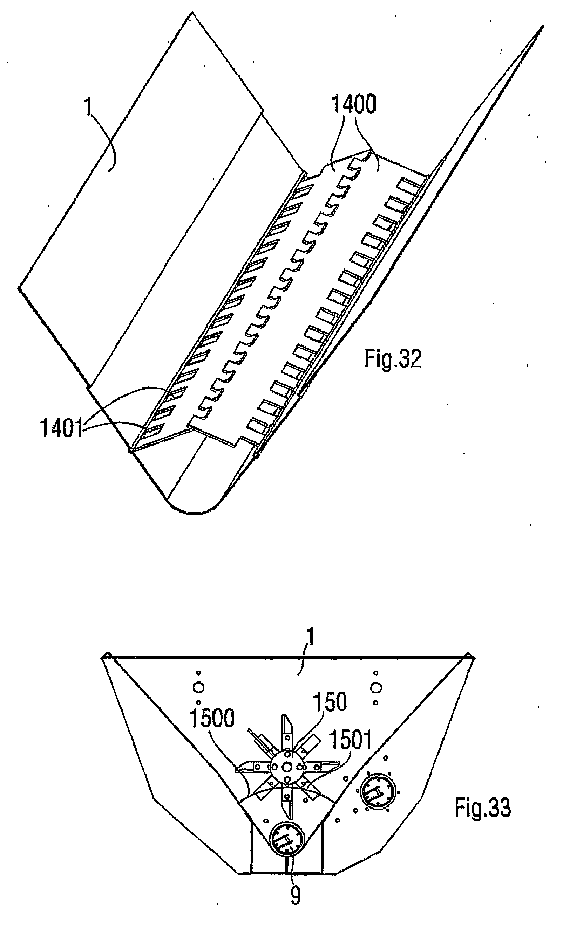

Selon une quatrième forme de réalisation telle que représentée en figure 32, la couverture en forme de dôme est formée de deux volets 1400 montés de manière articulée dans la trémie et rabattables l'un vers l'autre pour former le dôme comme décrit précédemment. L'un au moins des bords longitudinaux de chaque volet 1400 sera crénelé pour ménager les ouvertures 1401 de passage du produit.

Les bords libres longitudinaux des deux volets sont crénelés de façon à pouvoir s'interpénétrer en position de formation du dôme.

En position de non utilisation du dôme, les deux volets 1400 seront rabattus contre les flancs de la trémie et maintenus dans cette position par tous moyens adaptés.

En figure 33 est représentée une autre forme de réalisation de la couverture sous forme de dôme. Sur cette figure on remarque que cette couverture 1500 est dotée de lumières oblongues 1501 et que ces lumières sont traversées par les pales d'un rotor 150, monté dans la trémies 1 au-dessus de ladite couverture. Cette disposition peut être utilisée tant pour les produits fibreux que pour les produits sous formes de granulés. Cette couverture est bombée vers le haut, mais elle peut être plate ou bombée vers le bas.

Cette couverture peut se présenter sous la forme d'une grille dont les intervalles entre les barreaux déterminent les ouvertures 1501. Selon cette disposition, pales du rotor 150 peuvent être des couteaux et la grille peut constituer contre couteaux ou être dotée de contre couteaux. Cette disposition permet de broyer de la paille et autre produit dans la trémie 1.

## Revendications

1. Transporteur pour délivrer par voie pneumatique par tuyaux des produits à distance comprenant un châssis (1000) sur lequel est installé un convoyeur mécanique (2) formé d'un élément mobile (9) et d'une chemise (10) dans laquelle évolue l'élément mobile (9), ladite chemise comportant une ouverture d'alimentation en produit à transporter, une boîte de transfert (3) avec chambre de transfert (4) traversée de part en part de manière étanche par l'élément mobile du convoyeur (2) lequel y déverse les produits transportés, ladite boîte de transfert (3) selon un axe transversal à la direction du mouvement de l'élément mobile du convoyeur dans la chambre de transfert comportant deux orifices traversants (5, 6) débouchant tous deux dans la chambre de transfert (4) dont un est prévu pour communiquer avec une source d'air sous pression (7) apte à générer un flux d'air sous pression et.l'autre est prévu pour communiquer avec une conduite de distribution (8) dans laquelle les produits préalablement déversés par l'élément mobile de transport (9) du convoyeur dans la chambre de transfert (4), y sont transportés par le flux d'air sous pression préalablement introduit dans ladite chambre, l'élément mobile de transport (9) étant doté d'alvéoles consécutifs délimités par des cloisons de séparation (90) et la chemise (10) déterminant avec les alvéoles de l'élément mobile de transport des cellules consécutives de transport des produits depuis l'ouverture d'alimentation vers la boîte de transfert (3), **caractérisé en ce qu'**est prévu un moyen (100) apte à détecter des conditions de blocage de l'élément mobile (9) du convoyeur et apte à émettre un signal de défaut si ces conditions sont détectées, un moyen de commande (110) étant associé au moyen de détection (100), ce moyen de commande (110), si le signal de défaut est émis, étant apte à commander le sens de marche inverse de l'élément mobile de transport (9) et ce pendant une durée déterminée donnée par un moyen de temporisation (120) associé au moyen de commande (110), lequel, au terme de la période de temporisation, commande la marche de l'élément mobile (9)dans son sens normal de déplacement.

2. Transporteur selon la revendication 1, **caractérisé en ce que** le moyen (100) apte à détecter des conditions de blocage de l'élément mobile (9) du convoyeur est apte à mesurer la puissance consommée pour l'entraînement de l'élément mobile (9) du convoyeur, et est associé à un moyen de comparaison (130) apte à comparer la valeur mesurée à une valeur de consigne et à émettre un signal de défaut si la valeur mesurée est supérieure à la valeur de consigne, le moyen de commande (110), si le signal de défaut est émis, commandant alors le sens de marche inverse de l'élément mobile de transport (9) et ce pendant une durée déterminée donnée par le moyen de temporisation (120) associé au moyen de commande (110) lequel, au terme de cette période de temporisation, rétabli le sens normal de marche de l'élément mobile (9).

3. Transporteur selon la revendication 1, **caractérisé en ce que** le moyen (100) apte à détecter des conditions de blocage de l'élément mobile (9) du convoyeur est apte à mesurer la valeur de la vitesse de déplacement de l'élément mobile (9) du convoyeur ou d'un organe cinématiquement lié à l'organe mobile et est associé à un moyen de comparaison (130) apte à comparer la valeur mesurée à une valeur de consigne et à émettre un signal de défaut si la valeur mesurée est inférieure à la valeur de consigne le moyen de commande (110), si le signal de défaut est émis, commandant alors le sens de marche inverse de l'élément mobile de transport (9) et ce pendant une durée déterminée donnée par le moyen de temporisation (120) associé au moyen de commande (110) lequel, au terme de cette période de temporisation, rétabli le sens normal de marche de l'élément mobile (9).

4. Transporteur selon l'une quelconque des revendications précédentes, **caractérisé en ce qu'**en amont de la chambre de transfert (4) et en aval de l'ouverture d'alimentation, sur le trajet de l'élément mobile de transport (9), la chemise (10) est dotée d'au moins un dispositif d'introduction progressive (12) des produits dans le volume qu'elle définit.

5. Transporteur selon la revendication précédente, **caractérisé en ce que** le dispositif d'introduction progressive (12) présente un orifice d'introduction (12a) se développant de manière oblique par rapport à la direction du mouvement de l'élément mobile (9) au travers du dit orifice et que le bord de l'orifice d'introduction (12a) est avivé.

6. Transporteur selon l'une quelconque des revendications 4 ou 5, **caractérisé en ce que** le dispositif d'introduction (12) est agencé en entonnoir radialement expansible et que le dispositif d'introduction (12) comporte au moins une paroi souple (15) élastiquement déformable.

7. Transporteur selon l'une quelconque des revendications 4 à 6, **caractérisé en ce que** le dispositif d'entonnoir (12) est formé d'un corps tubulaire rigide (13) comprenant l'orifice d'introduction (12a), d'une paroi rigide mobile (14) disposée en regard de la forme de bec de flûte et d'une paroi souple (15) fixée d'une part au corps tubulaire et d'autre part à la paroi mobile laquelle est maintenue à écartement du corps tubulaire tant longitudinalement que radialement par un mécanisme support (16) autorisant le déplacement radial de ladite paroi à l'encontre de forces de rappel en position.

8. Transporteur selon l'une quelconque des revendications 4 à 6, **caractérisé en ce que** le dispositif d'introduction (12) sous forme d'entonnoir est intégralement réalisé en matériau souple élastiquement déformable.

9. Transporteur selon l'une quelconque des revendications précédentes, **caractérisé en ce que** le corps tubulaire (13) du dispositif d'entonnoir (12) ou la chemise (10) entre ce corps tubulaire (13) et la boîte de transfert (3) comporte au moins une fente (101) se développant de manière oblique par rapport aux génératrices du corps tubulaire ou de la chemise (10) afin d'imprimer à la masse de matière fibreuse lors de son passage, un mouvement de vissage.

10. Transporteur selon l'une quelconque des revendications précédentes, **caractérisé en ce que** la chemise (10) entre la boîte de transfert (3) et le dispositif d'introduction (12) est radialement expansible.

11. Transporteur selon la revendication précédente, **caractérisé en ce que** la chemise est constituée de trois éléments de parois métalliques (103) cintrés, liés les uns aux autres par une gaine tubulaire élastiquement déformable 104, les dits éléments (103), en l'absence de contraintes internes à la chemise, viennent par leur extrémité en contact les uns contre les autres sous l'effet des forces de rappel générées par la gaine élastique (104).

12. Transporteur selon la revendication précédente, **caractérisé en ce que** les éléments de parois cintrées (103) et la gaine (104) sont disposés dans un manchon métallique (105) déterminant avec lesdits éléments de parois cintrés et la gaine (104), une chambre dans laquelle règne une contre-pression pneumatique, ladite chambre étant alimentée en air sous pression.

13. Transporteur selon l'une quelconque des revendications précédentes, **caractérisé en ce qu'**il comporte un dispositif (1) d'alimentation en produit en relation de communication avec l'ouverture d'alimentation que comporte le convoyeur et que ce dispositif d'alimentation est une trémie (1).

14. Transporteur selon la revendication précédente, **caractérisé en ce que** l'élément mobile (9) du convoyeur chemine dans une goulotte inférieure pratiquée dans la trémie (1), que la trémie (1) comprend au moins un rotor déchiqueteur démêleur (150) entraîné en rotation dans la trémie par un organe moteur et qu'il comporte dans la trémie (1) un rotor dévouteur gaveur (150), apte à détruire les voûtes et apte à gaver les alvéoles de l'élément mobile (9).

15. Transporteur selon la revendication précédente, **caractérisé en ce que** le moyen de commande du moteur d'entraînement du rotor dévouteur gaveur (150), dès qu'un signal de défaut est émis par le moyen 100 apte à détecter des conditions de blocage de l'élément mobile (9), arrête le moteur d'entraînement du rotor dévouteur gaveur pendant une période de temps déterminée et l'active de nouveau si pendant cette période aucun autre signal de défaut n'a été émis.

16. Transporteur selon l'une quelconque des revendications précédentes, **caractérisé en ce que** l'élément mobile de transport (9) est une chaîne sans fin montée en tension entre une roue menante (95) et une roue menée (96), ladite chaîne comportant des disques (90) régulièrement espacés.

17. Transporteur selon la revendication précédente, **caractérisé en ce que** le moyen apte à détecter les conditions de blocage de la chaîne mobile (9) est l'une au moins des roues menante (95) ou menée (96), que ladite roue, par son palier de guidage en rotation, est montée dans un élément de guidage en translation et est déplaçable en translation dans cet élément de guidage à l'encontre de l'action d'un organe élastique de mise en tension de la chaîne, que le moyen de commande est apte à détecter le déplacement en translation de la roue qui se produit lors d'un blocage ou d'un effort anormal sur la chaîne et à commander l'inversion du sens de marche de la chaîne et que le moyen de commande est disposé sur la trajectoire du palier de guidage ou d'un élément porté par ce dernier et agit par inversion directe sur le moteur d'entraînement de la roue menante ou sur le circuit de commande de ce dernier.

18. Transporteur selon la revendication 16 ou 17, **caractérisé en ce que** chaque disque (90) de la chaîne (9) comporte un corps de disque et une garniture d'étanchéité (92) formant une saillie annulaire sur le corps de disque et que cette garniture d'étanchéité (92) sous l'effet d'efforts radiaux peut se rétracter dans le corps du disque.

19. Transporteur selon l'une quelconque des revendications précédentes, **caractérisé en ce qu'**il comporte un moyen de contrôle de la pression d'air dans la conduite d'alimentation en air de la chambre de transfert (3), ce dit moyen étant apte à émettre un signal de défaut si la valeur de la pression atteint ou dépasse au moins un seuil préétabli, le mouvement de l'élément mobile de transport (9) étant ralenti ou interrompu à partir de l'apparition de ce signal de défaut et la marche normale de l'élément mobile de transport (9) étant rétablie à partir de la disparition du signal de défaut, que sont déterminés deux seuils de pression, le dépassement du premier seuil de pression engendrant le mouvement de l'élément mobile de transport en vitesse lente, et le franchissement du second seuil de pression engendrant l'arrêt de cet élément et que le moyen de contrôle de pression d'air est apte à délivrer un signal électrique d'intensité proportionnelle à la valeur de la pression d'air et le moyen de commande 110 est apte à réduire la vitesse de rotation de l'arbre de sortie du moteur de manière inversement proportionnelle à la valeur de l'intensité de ce signal.

20. Transporteur selon l'une quelconque des revendications 4 à 8, **caractérisé en ce qu'**il est équipé en aval du dispositif d'entonnoir (12), en relation de communication avec le volume interne de la chemise (10), d'au moins un distributeur (200) de produits additionnels à adjoindre au produit à transporter.

21. Transporteur selon l'une quelconque des revendications précédentes, **caractérisé en ce qu'**il comporte au moins un réservoir de stockage (300) d'un produit liquide de traitement, au moins un moyen de pompe (301) pour puiser ce produit et au moins un moyen de pulvérisation (302) pour pulvériser ces produits liquides dans le flux d'air de transport, ledit moyen de pulvérisation recevant du moyen de pompe le produit à pulvériser.

22. Transporteur selon les revendications 13 et 21 prises ensemble, **caractérisé en ce que** la trémie (1) est intégralement disposée au-dessus de l'une des roues, que cette roue porte un rotor déchiqueteur sous forme de cône, que la chaîne (9) au niveau de chacune des roues est mobile dans une chambre délimitée par un carter à laquelle sont raccordés deux tronçons de chemise.

23. Transporteur selon l'une quelconque des revendications précédentes, **caractérisé en ce que** la conduite de transport pneumatique des matières fibreuses est connectée à un dispositif d'épandage (500) porté par un chariot (501) mobile sur un rail (502) suspendu dans un local d'élevage, que le dispositif d'épandage (500) est constitué par un canon oscillant, que ce canon est équipé d'un axe de pivotement vertical engagé dans un palier lisse supporté par le chariot (501) et que le chariot (501) est équipé d'un organe moteur d'entraînement d'un plateau manivelle (503) doté d'un maneton (504) engagé dans une coulisse (505) solidaire du canon (500).

24. Transporteur selon l'une quelconque des revendications précédentes, **caractérisé en ce qu'**en aval de l'orifice (5) et en amont de l'élément mobile (9), la chambre de transfert (4) présente une paroi de répartition d'air (4a) percée d'au moins un orifice traversant (4b) de répartition d'air.

25. Transporteur selon l'une quelconque des revendications précédentes, **caractérisé en ce qu'**il comporte dans la chambre de transfert (4), au moins un organe de nettoyage (4c) sous forme de balai venant frotter contre l'élément mobile (9).

26. Transporteur selon l'une quelconque des revendications précédentes, **caractérisé en ce que** la conduite de transport pneumatique (8) est connectable par un raccord à une conduite souple préinstallée dans le local d'élevage et supportée de manière électriquement isolée par des chariots portés par le rail de guidage (502) ladite conduite souple étant réalisée en matériau synthétique non traité contre l'électricité statique de façon que lors du transport du produit et notamment de la paille, des phénomènes d'électricité statique puissent apparaître sur les parois de cette dernière et retenir les poussières transportées par le produit.

27. Transporteur selon les revendications 13 et 16 prises ensemble, **caractérisé en ce que** la trémie est équipée de moyens pour contrôler et/ou calibrer la quantité de matière à distribuer au convoyeur mécanique (2) de façon qu'il ne puisse recevoir plus de matière qu'il ne peut en transporter sans bourrage et que la trémie (1), au-dessus du convoyeur (2), suivant toute la longueur de la partie de ce dernier située dans la trémie et à distance de ladite partie, reçoit une couverture rigide (1300, 1400, 1500) formant dôme, des ouvertures (1301, 1401, 1501) de passage du produit étant prévues dans la couverture ou le long de cette dernière.

28. Transporteur selon la revendication précédente, **caractérisé en ce que** la couverture en forme de dôme est formée de deux volets (1400) montés de manière articulée dans la trémie et rabattables l'un vers l'autre pour former le dôme l'un au moins des bords longitudinaux de chaque volet (1400) étant crénelé pour ménager les ouvertures (1401) de passage du produit.

29. Transporteur selon les revendications 13 et 16 prises ensemble **caractérisé en ce que** la trémie est équipée de moyens pour contrôler et/ou calibrer la quantité de matière à distribuer au convoyeur mécanique (2) de façon qu'il ne puisse recevoir plus de matière qu'il ne peut en transporter sans bourrage et qu'en zone aval de la trémie (1) ou en sortie de trémie et en amont du coude que forme le convoyeur, est prévue une boîte de prélèvement (1100) dans laquelle le produit en excès peut s'écouler librement, cette boîte de prélèvement étant en relation avec un dispositif de transport (1101) de ces produits vers la trémie (1) et vers la zone amont de cette dernière.

30. Transporteur selon l'une quelconque des revendications précédentes, **caractérisé en ce qu'**il est associé à une mélangeuse à vis, qu'il comporte un dispositif (1) d'alimentation en produit, constitué par une trémie, en relation de communication avec l'ouverture d'alimentation que comporte le convoyeur et que par sa trémie il est disposé sous la trappe de délivrance en produits que présente la cuve de la mélangeuse.

## Claims

1. Carrier to deliver products over a certain distance, by pneumatic means, through hoses, including a frame (1000) on which is installed a mechanical conveyor (2) made up of a moving component (9) and a jacket (10) inside which the moving component (9) is in motion, said jacket including an opening to feed the product to be transported, a transfer box (3) with transfer chamber (4) crossed right through, with sealing maintained, by the conveyor moving component (2) which tips in the products transported, said transfer box (3) along an axis transverse in relation to the direction of the movement of the conveyor moving component in the transfer chamber including two through holes (5, 6), both opening into the transfer chamber (4), one of which is designed to communicate with a source of pressurised air (7) capable of generating a flow of pressurised air, and the other designed to communicate with a distribution pipe (8) in which the products previously unloaded by the conveyor transportation moving component (9) in the transfer chamber (4), are carried by the flow of pressurised air previously introduced in said chamber, the transportation moving component (9) being fitted with consecutive recesses delimited by dividing walls (90) and the jacket (10) delimiting with the recesses on the transportation moving component consecutive cells for the transportation of products from the feeding opening to the transfer box (3), **characterised in that** a device is provided, (100) capable of detecting the conveyor moving component (9) jamming conditions, and capable of generating a defect signal if such conditions are detected, a control device (110) being associated with the detection device (100), this control device (110) being capable, if the defect signal is generated, of reversing the operating direction of the transportation moving component (9) for a specific time given by a time-delay device (120) associated with the control device (110) which, at the end of the time-delay period, runs the moving component (9) in the normal direction.

2. Carrier according to claim 1, **characterised in that** the device (100) capable of detecting jamming conditions of the conveyor moving component (9) is capable of measuring the power used to drive the conveyor moving component (9), and is associated with a comparison device (130) capable of comparing the value measured with a set value, and of generating a defect signal if the value measured is higher than the set value, with the control device (110), if the signal is generated, then reversing the working direction of the transportation moving component (9) for a specific time given by the time-delay device (120) associated with the control device (110) which, at the end of this time-delay period, restores the normal working direction of the moving component (9).

3. Carrier according to claim 1, **characterised in that** the device (100) capable of detecting jamming conditions of the conveyor moving component (9) is capable of measuring the value of the displacement speed of the conveyor moving component (9) or of an element kinematically linked with the moving element, and is associated with a comparison device (130) capable of comparing the value measured with a set value et and of generating a defect signal if the value measured is below the set value, with the control device (110), if the defect signal is generated, then reversing the direction of the transportation moving component (9) for a specific time given by the time-delay device (120) associated with the control device (110) which, at the end of this time-delay period, restores the normal working direction of the moving component (9).

4. Carrier according to any of the claims above, **characterised in that** upstream from the transfer chamber (4) and downstream from the feeding opening, along the path of the transportation moving component (9), the jacket (10) is fitted with at least one device for gradual introduction (12) of the products into the volume it defines.

5. Carrier according to the claim above, **characterised in that** the device for gradual introduction (12) has an introduction orifice (12a) running at an angle from the direction of motion of the moving component (9) through said orifice, and that the edge of the introduction orifice (12a) is burnished.

6. Carrier according to any of claims 4 or 5, **characterised in that** the introduction device (12) is laid out in the shape of a radially expansible funnel, and that the introduction device (12) includes at least one flexible, elastically yieldable wall (15).

7. Carrier according to any of claims 4 to 6, **characterised in that** the funnel device (12) is made up of a rigid tubular body (13) including the introduction orifice (12a), a rigid moveable wall (14) set opposite the spout shape and a flexible wall (15) fastened both to the tubular body and to the moveable wall, which wall is kept away from the tubular body, both longitudinally and radially, by a support mechanism (16) allowing the radial displacement of said wall against the forces bringing it back in position.

8. Carrier according to any of claims 4 to 6, **characterised in that** the funnel-shaped introduction device (12) is wholly made of a flexible, elastically yieldable material.

9. Carrier according to any of the claims above, **characterised in that** the tubular body (13) of the funnel device (12) or the jacket (10) between this tubular body (13) and the transfer box (3) includes at least one slot (101) running at an angle in relation to the generatrices of the tubular body or of the jacket (10) in order to subject the mass of fibrous matter to a screwing motion as it moves along.

10. Carrier according to any of the claims above, **characterised in that** the jacket (10) between the transfer box (3) and the introduction device (12) is radially expansible.

11. Carrier according to the claim above, **characterised in that** the jacket is made up of three curved metallic wall components (103), linked together by an elastically yieldable tubular sheath (104), with the ends of said components (103), in the absence of stresses inside the jacket, coming in contact against each other under the effect of the opposing forces generated by the elastic sheath (104).

12. Carrier according to the claim above, **characterised in that** the curved wall components (103) and the sheath (104) are positioned in a metallic sleeve (105) delimiting with said curved wall components and the sheath (104), a chamber which is under pneumatic counter-pressure, said chamber being fed with pressurised air.

13. Carrier according to any of the claims above, **characterised in that** it includes a device (1) to feed the product, communicating with the feeding opening on the conveyor, and that this feeding device is a hopper (1).

14. Carrier according to the claim above, **characterised in that** the conveyor moving component (9) runs through a lower trough in the hopper (1), that the hopper (1) includes at least one shredder separator rotor (150) driven in rotation in the hopper by a motor, and that it includes in the hopper (I) a debridger feeder rotor (150), capable of destroying bridges and of feeding the recesses of the moving component (9).

15. Carrier according to the claim above, **characterised in that** the control device of the debridger feeder rotor driving motor (150), as soon as a defect signal is generated by device 100 capable of detecting moving component jamming conditions (9), stops the debridger feeder rotor driving motor for a given period and reactivates it if no other defect signal has been generated during this period.

16. Carrier according to any of the claims above, **characterised in that** the transportation moving component (9) is an endless chain stretched between a driving gear (95) and a driven gear (96), said chain including evenly spaced disks (90).

17. Carrier according to the claim above, **characterised in that** the device capable of detecting jamming conditions on the moving chain (9) is at least one of the driving (95) or driven (96) gears, that said gear, through its rotary guiding bearing, is mounted in a linear guiding component, and can be moved along a straight line in this guiding component, against the action of a chain-stretching elastic element, that the control device is capable of detecting the linear motion of the gear which occurs on jamming or in case of abnormal stress on the chain, and of reversing the running direction of the chain, and that the control device is positioned on the path of the guiding bearing or of a component carried by this bearing, and acts through direct reversion on the driving gear driving motor or on the motor control circuit.

18. Carrier according to claim 16 or 17, **characterised in that** each disk (90) on the chain (9) includes a disk body and a packing seal (92) forming a raised ring on the body of the disk, and that under radial stresses, this packing seal (92) can retract into the body of the disk.

19. Carrier according to any of the claims above, **characterised in that** it includes a device to check the air pressure in the transfer chamber (3) air supply pipe, said device being capable of generating a defect signal if the pressure value reaches or exceeds at least one preset threshold, the motion of the transportation moving component (9) being slowed down or stopped from the time this defect signal is generated, and with normal running of the transportation moving component (9) being restored once the defect signal has disappeared, that two pressure thresholds are determined, with the motion of the transportation moving component being slowed down when the fist pressure threshold is exceeded, and this component being stopped when the second pressure threshold is exceeded, and that the device for checking the air pressure is capable of emitting an electrical signal with an intensity proportional to the air pressure value, and that the control device 110 is capable of reducing the motor output shaft rotation speed in a manner that is inversely proportional to the intensity value of this signal.

20. Carrier according to any of claims 4 to 8, **characterised in that** it is fitted, downstream from the funnel device (12) communicating with the inner volume of the jacket (10), with at least one distributor (200) of additional products to be added to the product to be transported.

21. Carrier according to any of the claims above, **characterised in that** it includes at least one storage tank (300) liquid treatment product, at least one pumping device (301) to draw this product, and at least one spraying device (302) to spray these liquid products in the carrier air flow, said spraying device receiving the product to be sprayed from the pumping device.

22. Carrier according to claims 13 and 21 together, **characterised in that** the hopper (1) is wholly placed above one of the two gears, that this gear bears a cone-shaped shredder rotor, that the chain (9) at the level of each wheel moves in a chamber delimited by a casing to which two sections of jacket are connected.

23. Carrier according to any of the claims above, **characterised in that** the pipe for pneumatic transportation of fibrous matter is connected to a spreading device (500) mounted on a carriage (501) moving on a rail (502) hanging in a lifting room, that the spreading device (500) comprises a swinging canon, that this canon is fitted with a vertical swivel axle inserted in a plain bearing supported by the carriage (501) and that the carriage (501) is equipped with a motor driving a crank plate (503) fitted with a crank pin (504) inserted in a slide (505) fixed to the canon (500).

24. Carrier according to any of the claims above, **characterised in that** downstream from the orifice (5) and upstream from the moving component (9), the transfer chamber (4) has an air distribution wall (4a) with at least one through hole (4b) for air distribution.

25. Carrier according to any of the claims above, **characterised in that** it is fitted in the transfer chamber (4) with at least one cleaning component (4c) in the form of a brush rubbing against the moving component (9).

26. Carrier according to any of the claims above, **characterised in that** the pneumatic transportation pipe (8) can be linked by a connector to a flexible pipe preinstalled in the lifting room and supported in an electrically insulated manner by carriages carried by the guide rail (502), said flexible pipe being made of a synthetic material untreated against static electricity, so that during transportation of the product, straw in particular, static electricity phenomena may occur on the walls of the pipe and collect the dust carried by the product.

27. Carrier according to claims 13 and 16 together, **characterised in that** the hopper is fitted with devices to check and/or adjust the quantity of material to be distributed to the mechanical conveyor (2) so that it does not receive more material than it can carry without packing, and that the hopper (1) above the conveyor (2), along the whole length of the part of the conveyor located in the hopper and at a distance from said part, receives a rigid cover (1300, 1400, 1500) forming a dome, with openings (1301, 1401, 1501) being provided in or along the cover to allow the product through.

28. Carrier according to the claim above, **characterised in that** the dome-shaped cover is made of two flaps (1400) hinged in the hopper and which can be pulled down towards each other to form the dome, with at least one of the longitudinal edges of each flap (1400) being serrated to provide openings (1401) to allow the product through.

29. Carrier according to claims 13 and 16 together, **characterised in that** the hopper is fitted with devices to check and/or adjust the quantity of material to be distributed to the mechanical conveyor (2) so that it does not receive more material than it can carry without packing, and that in the area downstream from the hopper (1) or at the outlet of the hopper and upstream from the bend formed by the conveyor, a collection box (1100) is provided, into which the excess product can flow freely, this collection box being connected to a device for transportation (1101) of these products to the hopper (1) and to the area upstream from the hopper.

30. Carrier according to any of the claims above, **characterised in that** it is associated with a screw mixer, that it includes a device (1) to supply the product, made up of a hopper communicating with the feeding opening in the conveyor, and that through its hopper, it is positioned under the product delivery hatch in the tank of the mixer.

## Patentansprüche

1. Transportanhänger zur Ausbringung von Erzeugnissen über Distanz mittels Rohr per Druckluft, mit einem Fahrgestell (1000), auf dem ein mechanisches Förderband (2) befestigt ist, welches aus einem beweglichen Element (9) und einer Ummantelung (10) besteht, in der das bewegliche Element (9) sich bewegt, die vorgenannte Ummantelung bestehend aus einer Öffnung für das Einfüllen der zu befördernden Erzeugnisse, einem Transportbehälter (3) mit Transportkammer (4), durch die sich wassergeschützt von einer Seite zur anderen das bewegliche Element des Förderbands (2) zieht, welches dort die zu befördernden Erzeugnisse einfüllt, dem vorgenannte Transportbehälter (3) in der Transportkammer entlang einer quer verlaufenden Achse in Bewegungsrichtung des beweglichen Elements des Förderbands, mit zwei Durchgangslöchern (5, 6), die beide in der Transportkammer (4) münden und von denen eins bestimmt ist für den Austausch mit einer Druckluftquelle (7), die einen Druckluftstrom erzeugen kann, und das andere bestimmt ist für den Austausch mit einer Verteilleitung (8), in die die vorab durch das bewegliche Transportelement (9) des Förderbands in der Transportkammer (4) mittels des vorab in die vorgenannte Kammer eingeführten Druckluftstroms eingebrachten Erzeugnisse befördert werden, das bewegliche Transportelement (9) mit aufeinander folgenden Wabenkörpern, begrenzt durch Trennwände (90) und die Ummantelung (10), die mit den Wabenkörpern des beweglichen Transportelements aufeinander folgende Zellen für den Transport der Erzeugnisse ab der Einfiill-Öffnung bis zum Transportbehälter (3) bilden, **dadurch gekennzeichnet, dass** ein Instrument (100) vorgesehen ist, das die Ursachen einer Blockierung des beweglichen Transportelements (9) des Förderbands erfassen kann und das eine Störmeldung auslösen kann, wenn diese Ursachen erfasst werden, ein mit dem Erfassungsinstrument (100) verbundenes Instrument zur Steuerung (110), dieses Steuerinstrument (110) kann, wenn die Störmeldung ausgelöst wird, die Bewegungsumkehrung des bewegliche Transportelements (9) auslösen und dies über eine bestimmte Zeitdauer, die über eine Zeitsteuerung (120) vorgegeben wird, die mit dem Steuerinstrument (110) verbunden ist, welches am Ende des Verzögerungszeitraums den Lauf des beweglichen Elements (9) in seine normale Bewegungsrichtung auslöst.

2. Transportanhänger gemäß Anspruch 1, **dadurch gekennzeichnet, dass** das Instrument (100) zum Erfassen der Ursachen einer Blockierung des beweglichen Elements (9) des Förderbands die Leistungsaufnahme für den Antrieb des beweglichen Elements (9) des Förderbands messen kann, und das mit einem Vergleichsinstrument (130) verbunden ist, das den gemessenen Wert mit dem Sollwert vergleichen und eine Störmeldung auslösen kann, wenn der Istwert über dem Sollwert liegt, bei Auslösen der Störmeldung wird das Steuerinstrument (110) die Bewegungsumkehrung des beweglichen Transportelements (9) auslösen und dies über eine bestimmte Zeitdauer, die vorgegeben wird durch die Zeitsteuerung (120), die mit dem Steuerinstrument (110) verbunden ist, welches am Ende der zeitgesteuerten Phase den Lauf in der normalen Bewegungsrichtung des beweglichen Elements (9) wiederherstellt.

3. Transportanhänger gemäß Anspruch 1, **dadurch gekennzeichnet, dass** das Instrument (100) zur Erfassung der Ursache einer Blockierung des beweglichen Elements (9) des Förderbands die Bewegungsgeschwindigkeit des beweglichen Elements (9) des Förderbands oder eines Elements, das mit dem beweglichen Element kinematisch verbunden ist, messen kann und das mit einem Vergleichsinstrument (130) verbunden ist, welches den Istwert mit dem Sollwert vergleichen kann und das eine Störmeldung auslösen kann, wenn der Istwert unter dem Sollwert des Steuerinstruments (110) liegt, bei Auslösen der Störmeldung wird es die Bewegungsumkehrung des mobilen Transportelements (9) auslösen und dies über eine bestimmte Zeitdauer, die vorgegeben wird von der Zeitsteuerung (120), die mit dem Steuerinstrument (110) verbunden ist, welches am Ende der zeitgesteuerten Phase den Lauf in der normalen Bewegungsrichtung des beweglichen Elements (9) wiederherstellt.

4. Transportanhänger gemäß einem der vorgenannten Ansprüche, **dadurch gekennzeichnet, dass** die Ummantelung (10) vor der Transportkammer und nach der Einfüll-Öffnung, auf der Bahn des beweglichen Transportelements (9), versehen ist mit mindestens einer Vorrichtung für das progressive Einfüllen (12) der Erzeugnisse in den von ihr bestimmten Raum.

5. Transportanhänger gemäß des vorgenannten Anspruchs, **dadurch gekennzeichnet, dass** die Vorrichtung für das progressive Einfüllen (12) ein Einfüll-Loch (12a) aufweist, sich mittels des vorgenannten Lochs schräg zur Bewegungsrichtung des beweglichen Elements (9) ausdehnt, und dass der Rand des Einfüll-Lochs (12a) verstärkt ist.

6. Transportanhänger gemäß einem der Ansprüche 4 oder 5, **dadurch gekennzeichnet, dass** die Einfiillvorrichtung (12) radial dehnbar und trichterförmig angeordnet ist, und dass die Einfüllvorrichtung (12) mindestens eine flexible und elastisch verformbare Wand (15) umfasst.

7. Transportanhänger gemäß einem der Ansprüche 4 bis 6, **dadurch gekennzeichnet, dass** die Trichter-Vorrichtung (12) besteht aus einem starren rohrförmigen Körper (13), der das Einfüll-Loch (12a) umfasst, einer beweglichen starren Wand (14), deren Form vergleichbar ist mit dem Mundstück einer Flöte, und einer elastisch verformbaren Wand (15), die befestigt ist auf der einen Seite an dem rohrförmigen Körper und auf der anderen Seite an der beweglichen Wand, welche durch einen Stützmechanismus (16) sowohl längsseitig als auch radial auf Abstand zum rohrförmigen Körper gehalten wird und der Radialbewegungen der vorgenannten Wand gegen die Rückstellkräfte ermöglicht.

8. Transportanhänger gemäß einem der Ansprüche 4 bis 6, **dadurch gekennzeichnet, dass** die trichterförmige Einfüllvorrichtung (12) vollständig aus flexiblem elastisch verformbaren Material besteht.

9. Transportanhänger gemäß einem der vorgenannten Ansprüche, **dadurch gekennzeichnet, dass** der rohrförmige Körper (13) der Trichter-Vorrichtung (12) oder der Ummantelung (10) zwischen diesem rohrförmigen Körper (13) und dem Transportbehälter (3) mindestens einen Schlitz (101) umfasst, der sich gegenüber dem rohrförmigen Körper oder der Ummantelung (10) schief ausdehnt, um während seines Durchlaufs eine Schraubbewegung auf die Fasermasse ausüben zu können.

10. Transportanhänger gemäß einem der vorgenannten Ansprüche, **dadurch gekennzeichnet, dass** die Ummantelung (10) zwischen dem Transportbehälter (3) und der Einfüllvorrichtung (12) radial dehnbar ist.

11. Transportanhänger gemäß des vorgenannten Anspruchs, **dadurch gekennzeichnet, dass** die Ummantelung aus drei gewölbten metallischen Wandelementen (103) besteht, die miteinander verbunden sind durch eine elastisch verformbare schlauchförmige Hülle (104), die vorgenannten Elemente (103) treten unter dem Effekt der durch die elastische Hülle (104) erzeugten Rückstellkräfte mit ihren Enden in Kontakt, sofern keine inneren Spannungen der Ummantelung vorliegen.

12. Transportanhänger gemäß des vorgenannten Anspruchs, **dadurch gekennzeichnet, dass** die Elemente der metallischen Wand (103) und der Hülle (104) in einer Muffe aus Metall (105) angeordnet sind, die mit den vorgenannten metallischen Wandelementen und der Hülle (104) eine Kammer bilden, in der ein pneumatischer Gegendruck herrscht, der vorgenannten Kammer wird Druckluft zugeführt.

13. Transportanhänger gemäß einem der vorgenannten Ansprüche, **dadurch gekennzeichnet, dass** er eine Vorrichtung (1) zum Einfüllen von Erzeugnissen über eine Austausch-Verbindung mit der Einfüll-Öffnung umfasst, die Bestandteil des Förderbands ist, und dass diese Einfüll-Vornchtung ein Trichter (1) ist.

14. Transportanhänger gemäß des vorgenannten Anspruchs, **dadurch gekennzeichnet, dass** das bewegliche Element (9) des Förderbands sich in einer Rinne bewegt, die unterhalb des Trichters (1) angebracht ist, dass der Trichter (1) mindestens einen Rotor zum Austragen und Beschicken (150) umfasst, der in dem Trichter durch ein Motorelement zur Rotation angetrieben wird, und dass sich im Trichter (1) ein Austrags- und Beschickungs-Rotor (150) befindet, der Brückenbildungen räumen und die Waben des beweglichen Elements (9) beschicken kann.

15. Transportanhänger gemäß des vorgenannten Anspruchs, **dadurch gekennzeichnet, dass** das Steuerinstrument des Antriebsmotors des Austrags- und Beschickungs-Rotors (150) den Antriebsmotor des Austrags- und Beschickungs-Rotors für eine bestimmte Zeitdauer anhält, wenn das Instrument (100), das die Ursachen einer Blockierung des beweglichen Transportelements (9) erfassen kann, eine Störmeldung auslöst und den Betrieb wieder aufnimmt, wenn während dieser Phase keine weitere Störmeldung ausgelöst wurde.

16. Transportanhänger gemäß einem der vorgenannten Ansprüche, **dadurch gekennzeichnet, dass** das bewegliche Transportelement (9) eine Endloskette ist, die unter Spannung zwischen einem Antriebsrad (95) einem Abtriebsrad (96) montiert ist, vorgenannte Kette besteht aus Scheiben (90), die in regelmäßigen Abständen angeordnet sind.

17. Transportanhänger gemäß des vorgenannten Anspruchs, **dadurch gekennzeichnet, dass** das Instrument, das die Ursachen einer Blockierung des beweglichen Transportelements (9) erfassen kann, mindestens eines der Antriebsräder (95) oder Abtriebsräder (96) ist, dass das vorgenannte Rad mittels eines Dreh-Führungslagers in einem translatorisch bewegbaren Führungselement montiert ist, und dass es in diesem Führungselement translatorisch verschiebbar ist gegen die Wirkung eines elastischen Elements zum In-Spannung-Setzen der Kette, dass das Steuerinstrument in der Lage ist, die translatorische Bewegung des Rads, die während einer Blockierung oder einer nicht- üblichen Beanspruchung der Kette auftritt, zu erfassen und die Bewegungsumkehrung der Kette auszulösen, und dass das Steuerinstrument auf der Bahn des Führungslagers oder auf einem durch dieses getragenen Element angeordnet ist und mittels direkter Inversion auf den Antriebsmotor des Antriebsrads oder den Steuerstromkreis des letztgenannten einwirkt.

18. Transportanhänger gemäß einem der Ansprüche 16 oder 17, **dadurch gekennzeichnet, dass** jede Scheibe (90) der Kette (9) einen Scheibenkörper und einen Dichtsatz (92) umfasst, die einen ringförmigen Vorsprung auf dem Scheibenkörper bilden und dass dieser Dichtsatz (92) sich unter Einwirkung von Radialkräften in den Scheibenkörper zurückziehen kann.

19. Transportanhänger gemäß einem der vorgenannten Ansprüche, **dadurch gekennzeichnet, dass** dieser in der Luftzuführung der Transportbehälter (3) ein Instrument zur Luftdruckkontrolle umfasst, das genannte Instrument kann eine Störmeldung auslösen, wenn der Luftdruckwert mindestens einen der vorgegebenen Grenzwerte erreicht oder überschreitet, während die Bewegung des beweglichen Transportelements (9) ab Auftreten dieser Störmeldung verlangsamt oder unterbrochen wird und die normale Bewegung des beweglichen Transportelements (9) ab Erlöschen der Störmeldung wieder aufgenommen wird, dass zwei Grenzwerte für den Luftdruck festgelegt sind, das Überschreiten des ersten Grenzwerts eine langsame Bewegung des beweglichen Transportelements auslöst und das Überschreiten des zweiten Grenzwerts den Stopp dieses Elements auslöst und dass der Druckwächter ein elektrisches Signal abgeben kann, das proportional zu dem Luftdruckwert zunimmt und dass das Steuerinstrument 110 die Geschwindigkeit der Motorkurbelwelle umgekehrt proportional zu dem Intensitätswert dieses Signals reduzieren kann.

20. Transportanhänger gemäß einem der Ansprüche 4 bis 8, **dadurch gekennzeichnet, dass** er mit mindestens einem Verteiler (200) ausgestattet ist für zusätzliche Produkte, die den zu befördernden Erzeugnissen hinzugefügt werden sollen, und der der Einfüllvorrichtung (12) nachgelagert ist und in Austauschverbindung mit dem Innenvolumen der Ummantelung (10) steht.

21. Transportanhänger gemäß einem der vorgenannten Ansprüche, **dadurch gekennzeichnet, dass** er mindestens einen Speicher (300) für ein flüssiges Behandlungsmittel umfasst, mindestens eine Pumpvorrichtung (301) zum Entnehmen dieses Mittels und mindestens eine Zerstäubungsvorrichtung (302) zum Zerstäuben dieser flüssigen Produkte im Strom der Transportluft, dass vorgenannte Zerstäubungsvorrichtung das Zerstäubungsmittel von der Pumpvorrichtung erhält.

22. Transportanhänger gemäß Anspruch 13 in Verbindung mit Anspruch 21, **dadurch gekennzeichnet, dass** der Trichter (1) komplett über einem der Räder angeordnet ist, dass dieses Rad einen kegelförmigen Rotor zum Austragen trägt, dass die Kette (9) auf der Höhe der Räder in einer Kammer beweglich ist, welche durch Gehäuse umfasst ist, mit dem zwei Stücke der Ummantelung verbunden sind.

23. Transportanhänger gemäß einem der vorgenannten Ansprüche, **dadurch gekennzeichnet, dass** die pneumatische Förderleitung für faserartige Stoffe an eine Verteilvorrichtung (500), die in einem Zuchtraum aufgehangen ist, angeschlossen ist, die durch einen an einer Schiene (502) beweglichen Wagen (501) getragen wird, dass die Verteilvorrichtung (500) aus einem schwenkbaren Rohr besteht, dass dieses Rohr mit einer horizontal verlaufenden Schwenkachse versehen ist und dass der Wagen (501) mit einem Antriebsmotorenelement für eine Kurbelplatte (503) ausgestattet ist, die mit einem Hublager (504) versehen ist, das mit einer Führungsleiste (505) verbunden ist, welche fest mit der Verteilvorrichtung (500) verbunden ist.

24. Transportanhänger gemäß einem der vorgenannten Ansprüche, **dadurch gekennzeichnet, dass** die dem Loch (5) nachgelagerte und dem beweglichen Element (9) vorgelagerte Transportkammer (4) eine Wand (4a) hat, die der Luftverteilung dient und die mindestens eine Durchgangsloch (4b) aufweist.

25. Transportanhänger gemäß einem der vorgenannten Ansprüche, **dadurch gekennzeichnet, dass** sich in der Transportkammer (4) mindestens ein besenförmiges Reinigungselement (4c) befindet, dass gegen das bewegliche Element (9) reibt.

26. Transportanhänger gemäß einem der vorgenannten Ansprüche, **dadurch gekennzeichnet, dass** die pneumatische Verteilleitung (8) durch ein Anschlussstück mit einer im Zuchtraum vorinstallierten flexiblen Leitung verbunden werden kann und elektrisch isoliert durch von der Führungsschiene (502) getragene Wagen gestützt wird, vorgenannte flexible Leitung besteht aus synthetischem Material, das nicht gegen elektrostatische Aufladungen behandelt wurde, so dass während des Transports der Erzeugnisse und insbesondere von Stroh, auf den Wänden der letztgenannten elektrostatische Phänomene auftreten können, die den von den Erzeugnissen transportierten Staub zurückhalten können.

27. Transportanhänger gemäß Anspruch 13 in Verbindung mit Anspruch 16, **dadurch gekennzeichnet, dass** der Trichter ausgestattet ist mit Vorrichtungen zum Steuern und/oder zum Kalibrieren der Menge der auf dem mechanischen Förderband (2) zu verteilenden Stoffe, so dass diesem nur so viel Stoffe zugeführt werden, dass kein Stau ausgelöst wird, und dass der Trichter (1) über dem Förderband (2) entlang der sich im Trichter befindenden Partie des letztgenannten und im Abstand zu vorgenannter Partie eine steife Decke (1300, 1400, 1500) empfängt, die einen Dom bildet, Durchgangsöffnungen (1301, 1401, 1501) für die Erzeugnisse sind in der Decke oder entlang dieser vorgesehen.

28. Transportanhänger gemäß des vorgenannten Anspruchs, **dadurch gekennzeichnet, dass** die domförmige Decke aus zwei Klappen (1400) gebildet wird, die in dem Trichter drehbar montiert und übereinander klappbar sind, um den Dom zu bilden, mindestens eine der Längsseiten jeder Klappe (1400) ist ausgezackt, um die Öffnungen (1401) für den Durchlauf der Erzeugnisse zu bilden.

29. Transportanhänger gemäß Anspruch 13 in Verbindung mit Anspruch 16, **dadurch gekennzeichnet, dass** der Trichter ausgestattet ist mit Vorrichtungen zum Steuern und/oder zum Kalibrieren der Menge der auf dem mechanischen Förderband (2) zu verteilenden Stoffe, so dass diesem nur so viel Stoffe zugeführt werden, dass kein Stau ausgelöst wird, und dass in der dem Trichter (1) nachgelagerten Zone oder am Ausgang des Trichters und dem von dem Förderband gebildeten Bogen vorgelagert, ein Entnahmebehälter (1100) vorgesehen ist, in dem die überschüssigen Erzeugnisse frei abfließen können, dieser Entnahmebehälter ist in Verbindung mit einer Transportvorrichtung (1101), die diese Erzeugnisse zum Trichter (1) und der diesem vorgelagerten Zone befördert.

30. Transportanhänger gemäß einem der vorgenannten Ansprüche, **dadurch gekennzeichnet, dass** dieser mit einer Schnecken-Mischvorrichtung verbunden ist, dass er eine Vorrichtung (1) zum Einfüllen der Erzeugnisse umfasst, die aus einem Trichter besteht, der in Austauschverbindung mit der zum Förderband gehörenden Einfüll-Öffnung steht, und dass er über den Trichter unter der Produktausgabeklappe, die die Wanne der Michschvorrichtung bildet, angeordnet ist.
